(19) **Europäisches Patentamt** / **European Patent Office** / **Office européen des brevets**

(11) **EP 4 668 872 A1**

(12) **EUROPEAN PATENT APPLICATION**
published in accordance with Art. 153(4) EPC

(43) Date of publication:
24.12.2025 Bulletin 2025/52

(21) Application number: 24734778.4

(22) Date of filing: 23.01.2024

(51) International Patent Classification (IPC):
H04W 48/18 (2009.01)    H04W 24/08 (2009.01)
H04W 8/02 (2009.01)    H04W 60/00 (2009.01)

(52) Cooperative Patent Classification (CPC):
H04W 8/02; H04W 24/08; H04W 48/18;
H04W 60/00

(86) International application number:
PCT/KR2024/001046

(87) International publication number:
WO 2024/172321 (22.08.2024 Gazette 2024/34)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 16.02.2023 US 202363446031 P
19.02.2023 US 202363446892 P

(71) Applicant: LG Electronics Inc.
Seoul 07336 (KR)

(72) Inventors:
• KIM, Sunhee
Seoul 06772 (KR)
• KIM, Hyun Sook
Seoul 06772 (KR)
• CHOE, Hyunjung
Seoul 06772 (KR)
• YOUN, Myungjune
Seoul 06772 (KR)

(74) Representative: Mooser, Sebastian Thomas
Wuesthoff & Wuesthoff
Patentanwälte und Rechtsanwalt PartG mbB
Schweigerstraße 2
81541 München (DE)

(54) **DEVICE AND METHOD FOR SELECTING PUBLIC LAND MOBILE NETWORK IN WIRELESS COMMUNICATION SYSTEM**

(57) The present disclosure relates to selecting a public land mobile network (PLMN) in a wireless communication system, and a method performed by a terminal may include transmitting a registration request message, receiving a registration accept message including steering of roaming (SOR)-signal level enhanced network selection (SENSE) information from an access management function (AMF) of a first network, wherein the AMF of the first network receives the SOR-SENSE information from a unified data management (UDM) of a second network, transmitting a registration complete message, determining whether or not SENSE is applicable based on the SOR-SENSE information, and performing public land mobile network (PLMN) selection based on whether or not the SENSE is applicable.

FIG. 7

EP 4 668 872 A1

## Description

## Technical Field

The present disclosure relates to a wireless communication system, and more particularly, to an apparatus and method for selecting a public land mobile network (PLMN) in a wireless communication system.

## Background Art

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

In particular, as a large number of communication devices require a large communication capacity, the enhanced mobile broadband (eMBB) communication technology, as compared to the conventional radio access technology (RAT), is being proposed. In addition, not only massive machine type communications (massive MTC), which provide a variety of services anytime and anywhere by connecting multiple devices and objects, but also a communication system considering a service/user equipment (UE) sensitive to reliability and latency is being proposed. Various technical configurations for this are being proposed.

## Disclosure

## Technical Problem

The present disclosure relates to an apparatus and method for performing signal level-based network selection of a wireless communication system.

The present disclosure relates to an apparatus and method for indicating whether or not a terminal is a stationary terminal for signal level-based network selection of a wireless communication system.

The present disclosure relates to an apparatus and method for determining whether or not a terminal is a stationary terminal based on information acquired by a network in a wireless communication system.

The present disclosure relates to an apparatus and method for indicating by a terminal whether or not a terminal is a stationary terminal to a network in a wireless communication system.

Technical objects to be achieved in the present disclosure are not limited to what is mentioned above, and other technical objects not mentioned therein can be considered from the embodiments of the present disclosure to be described below by those skilled in the art to which a technical configuration of the present disclosure is applied.

## Technical Solution

As an example of the present disclosure, a method performed by a terminal in a wireless communication system may include transmitting a registration request message, receiving a registration accept message including steering of roaming (SOR)-signal level enhanced network selection (SENSE) information from an access management function (AMF) of a first network, wherein the AMF of the first network receives the SOR-SENSE information from a unified data management (UDM) of a second network, transmitting a registration complete message, determining whether or not SENSE is applicable based on the SOR-SENSE information, and performing public land mobile network (PLMN) selection based on whether or not the SENSE is applicable, and based on the SENSE being applicable to a terminal, the PLMN selection may be performed based on a signal threshold, and based on the SENSE being inapplicable to the terminal, the PLMN selection may be performed based on a priority order.

In addition, as an example of the present disclosure, a terminal operating in a wireless communication may include at least one transceiver, at least one processor, and at least one memory operably coupled with the at least one processor and storing instructions that instruct the at least one processor to perform a specific operation when executed, the specific operation may include receiving roaming (SOR)-signal level enhanced network selection (SENSE) information from an access management function (AMF) of a first network, wherein the AMF of the first network receives the SOR-SENSE information from a unified data management (UDM) of a second network, determining whether or not SENSE is applicable, and performing public land mobile network (PLMN) selection based on whether or not the SENSE is applicable, and based on the SENSE being applicable to the terminal, the PLMN selection may be performed based on a signal threshold, and based on the SENSE being inapplicable to the terminal, the PLMN selection may be performed based on a priority order.

As an example of the present disclosure, a terminal in a wireless communication system may include a transceiver and a processor coupled with the transceiver, the processor may be configured to receive roaming (SOR)-signal level enhanced network selection (SENSE) information from an access management function (AMF) of a first network, wherein the AMF of the first network receives the SOR-SENSE information from a unified data management (UDM) of a second network, to determine whether or not SENSE is applicable, and to perform public land mobile network (PLMN) selection based on whether or not the SENSE is applicable, and based on the SENSE being applicable to the terminal, the PLMN selection may be performed based on a signal threshold, and based on the SENSE being inapplicable to the terminal, the PLMN selection may be performed based on a priority order.

As an example of the present disclosure, a first network node in a wireless communication system may include a transceiver and a processor coupled with the transceiver, the processor may be configured to acquire terminal-related information from a terminal and transmit the terminal-related information to a unified data management (UDM) of a second network, to receive roaming (SOR)-signal level enhanced network selection (SENSE) information from the UDM of the second network, and to transmit the received SOR-SENSE information to the terminal, the terminal performs public land mobile network (PLMN) selection by determining whether or not SENSE is applicable, and based on the SENSE being applicable to the terminal, the PLMN selection may be performed based on a signal threshold, and based on the SENSE being inapplicable to the terminal, the PLMN selection may be performed based on a priority order.

As an example of the present disclosure, a communication device may include at least one processor and at least one computer memory coupled with the at least one processor and storing an instruction that instructs operations when executed by the at least one processor, and the operations may include receiving, by a terminal, steering of roaming (SOR)-signal level enhanced network selection (SENSE) information from an access management function (AMF) of a first network, wherein the AMF of the first network receives the SOR-SENSE information from a unified data management (UDM) of a second network, determining, by the terminal, whether or not SENSE is applicable, and performing public land mobile network (PLMN) selection based on whether or not the SENSE is applicable. Based on the SENSE being applicable to the terminal, the PLMN selection may be performed based on a signal threshold, and based on the SENSE being inapplicable to the terminal, the PLMN selection may be performed based on a priority order.

As an example of the present disclosure, a non-transitory computer-readable medium storing at least one instruction may include the at least one instruction that is executable by a processor, the at least one instruction may control a device to receive roaming (SOR)-signal level enhanced network selection (SENSE) information from an access management function (AMF) of a first network, wherein the AMF of the first network receives the SOR-SENSE information from a unified data management (UDM) of a second network, to determine whether or not SENSE is applicable, and to perform public land mobile network (PLMN) selection based on whether or not the SENSE is applicable, and based on the SENSE being applicable to the terminal, the PLMN selection may be performed based on a signal threshold, and based on the SENSE being inapplicable to the terminal, the PLMN selection may be performed based on a priority order.

The above-described aspects of the present disclosure are only a part of the preferred embodiments of the present disclosure, and various embodiments reflecting technical features of the present disclosure may be derived and understood by those skilled in the art on the basis of the detailed description of the present disclosure provided below.

**Advantageous Effects**

The present disclosure may provide a method for performing signal level-based network selection of a wireless communication system.

The present disclosure may provide a method for indicating whether or not a terminal is a stationary terminal for signal level-based network selection of a wireless communication system.

The present disclosure may provide a method for determining whether or not a terminal is a stationary terminal based on information acquired by a network in a wireless communication system.

The present disclosure may provide a method for indicating by a terminal whether or not a terminal is a stationary terminal to a network in a wireless communication system.

Technical objects to be achieved in the present disclosure are not limited to what is mentioned above, and other technical objects not mentioned therein can be considered from the embodiments of the present disclosure to be described below by those skilled in the art to which a technical configuration of the present disclosure is applied.

Effects obtained in the present disclosure are not limited to the above-mentioned effects, and other effects not mentioned above may be clearly derived and understood by those skilled in the art, to which a technical configuration of the present disclosure is applied, from the following description of embodiments of the present disclosure. That is, effects, which are not intended when implementing a configuration described in the present disclosure, may also be derived by those skilled in the art from the embodiments of the present disclosure.

## Description of Drawings

The accompanying drawings are provided to aid understanding of the present disclosure, and embodiments of the present disclosure may be provided together with a detailed description. However, the technical features of the present disclosure are not limited to a specific drawing, and features disclosed in each drawing may be combined with each other to constitute a new embodiment. Reference numerals in each drawing may mean structural elements.

FIG. 1 illustrates an example communication system applicable to the present disclosure.
FIG. 2 shows an example of UE to which an implementation of the present specification is applied.
FIG. 3 is a view illustrating an example of functional separation of a typical NG-RAN and a 5th generation core (5GC).
FIG. 4 is a view illustrating an example of a typical architecture of a 5G system.
FIG. 5 illustrates an example of a procedure of receiving a PLMN list based on steering of roaming (SOR) in a process where a terminal applicable to the present disclosure is registered to a VPLMN.
FIG. 6 illustrates an example of a procedure of updating a list of preferred PLMN/access technology combinations applicable to the present disclosure.
FIG. 7 illustrates an example of a procedure of providing SENSE-related SOR information to a terminal according to an embodiment of the present disclosure.
FIG. 8 illustrates an example of a procedure of determining whether or not a terminal is a stationary terminal by a network according to an embodiment of the present disclosure.
FIG. 9 illustrates an example of a procedure of indicating by a terminal according to an embodiment of the present disclosure to a network regarding whether or not the terminal is a stationary terminal.
FIG. 10 illustrates an example of a procedure of indicating by a terminal according to an embodiment of the present disclosure to a network regarding whether or not the terminal is a stationary terminal.
FIG. 11 illustrates an example of a procedure of operating a terminal according to an embodiment of the present disclosure.
FIG. 12 illustrates an example of a procedure of operating a node according to an embodiment of the present disclosure.

## Mode for Invention

Following embodiments are achieved by combination of structural elements and features of the present disclosure in a predetermined manner. Each of the structural elements or features should be considered selectively unless specified separately. Each of the structural elements or features may be carried out without being combined with other structural elements or features. Also, some structural elements and/or features may be combined with one another to constitute the embodiments of the present disclosure. The order of operations described in the embodiments of the present disclosure may be changed. Some structural elements or features of one embodiment may be included in another embodiment, or may be replaced with corresponding structural elements or features of another embodiment.

In the description of the drawings, procedures or steps which render the scope of the present disclosure unnecessarily ambiguous will be omitted and procedures or steps which can be understood by those skilled in the art will be omitted.

In the entire specification, when a certain portion "comprises" or "includes" a certain component, this indicates that the other components are not excluded, but may be further included unless specially described. The terms "unit", "-or/er" and "module" described in the specification indicate a unit for processing at least one function or operation, which may be implemented by hardware, software and a combination thereof. In addition, "a or an", "one", "the" and similar related words may be used as the sense of including both a singular representation and a plural representation unless it is indicated in the context describing the present specification (especially in the context of the following claims) to be different from this specification or is clearly contradicted by the context.

In this specification, the embodiments of the present disclosure are described with focus on the relationship of data reception and transmission between a base station and a mobile station. Herein, the base station means a terminal node of a network that performs direct communication with the mobile station. In this document, a specific operation, which is described to be performed by a base station, may be performed by an upper node of the base station in some cases.

That is, in a network consisting of a plurality of network nodes including a base station, various operations for communicating with a mobile station may be performed by the base station or network nodes other than the base station. Herein, "base station" may be replaced by such terms as "fixed station", "Node B", "eNode B(eNB)", "gNode B(gNB)", "ng-eNB", "advanced base station(ABS)", or "access point".

Also, in the embodiments of the present disclosure, "terminal" may be replaced by such terms as "user equipment(UE)", "mobile station(MS)", "subscriber station(SS)", "mobile subscriber station(MSS)", "mobile terminal" or "advanced mobile station(AMS)".

In addition, a transmission end refers to a fixed and/or mobile node that provides a data service or a voice service, and a reception end means a fixed and/or mobile node that receives a data service or a voice service. Accordingly, in the case of an uplink, a mobile station may be a transmission end, and a base station may be a reception end. Likewise, in the case of a downlink, a mobile station may be a reception end, and a base station may be a transmission end.

The embodiments of the present disclosure may be supported by standard documents disclosed in at least one of the following radio access systems: an IEEE 802 xx system, a 3rd generation partnership project (3GPP) system, a 3GPP long term evolution (LTE) system, a 3GPP 5th generation (5G) new radio (NR) system and a 3GPP2 system, and in particular, the embodiments of the present disclosure may be supported by the following documents: 3GPP TS (technical specification) 38.211, 3GPP TS 38.212, 3GPP TS 38.213, 3GPP TS 38.321, and 3GPP TS 38.331.

In addition, the embodiments of the present disclosure are applicable to another radio access system but is not limited to the above-described system. As an example, they are applicable to a system applied after a 3GPP 5G NR system and are not limited to a specific system.

That is, obvious steps and parts not described in the embodiments of the present disclosure may be described with reference to the above documents. In addition, all the terms disclosed in this document may be explained by the standard document.

Hereinafter, a preferred embodiment according to the present disclosure will be described in detail with reference to accompanying drawings. Detailed descriptions disclosed below together with accompanying drawings are intended to describe example embodiments of the present disclosure and not intended to show any sole embodiment in which a technical configuration of the present disclosure can be implemented.

In addition, specific terms used in the embodiments of the present disclosure are provided to help understand the present disclosure, and such specific terms may be used in any other modified forms without departing from the technical idea of the present disclosure.

The following technology may be applied to various radio access systems such as Code Division Multiple Access (CDMA), Frequency Division Multiple Access (FDMA), Time Division Multiple Access (TDMA), Orthogonal Frequency Division Multiple Access (OFDMA), Single Carrier Frequency Division Multiple Access (SC-FDMA) and the like.

For clarity of explanation, the descriptions below are based on a 3GPP communication system (e.g. LTE, NR and the like), but the technical idea of the present disclosure is not limited thereto. LTE may mean a technology after 3GPP TS 36.xxx Release 8. Specifically, the LTE technology after 3GPP TS 36.xxx Release 10 may be referred to as LTE-A, and the one after 3GPP TS 36.xxx Release 13 may be referred to as LTE-A pro. 3GPP NR may mean a technology after TS 38.xxx Release 15. 3GPP 6G may mean a technology after TS Release 17 and/or Release 18. "xxx' means the specific number of a standard document. LTE/NR/6G may be referred to collectively as 3GPP system.

Contents described in standard documents released earlier than the present disclosure may be referred to for the background art, terms and abbreviations used in the present disclosure. As an example, 36.xxx and 38.xxx standard documents may be referred to.

For terms, abbreviations, and other backgrounds that may be used in this document, reference may be made to the following standard document descriptions published prior to this document. In particular, terms, abbreviations, and other background technologies related to LTE/EPS (Evolved Packet System) may refer to 36.xxx series, 23.xxx series, and 24.xxx series, and NR (new radio)/5GS related terms and abbreviations and other backgrounds may refer to the 38.xxx series, 23.xxx series and 24.xxx series.

Hereinafter, the present disclosure is described based on the terms defined as above.

Three major requirement areas of 5G include (1) an enhanced mobile broadband (eMBB) area, (2) a massive machine type communication (mMTC) area, and (3) an ultra-reliable and low latency communications (URLLC) area.

Some use cases may require multiple areas for optimization, and other use case may be focused on only one key performance indicator (KPI). 5G supports these various use cases in a flexible and reliable method.

**Communication system applicable to the present disclosure**

Although not limited thereto, various descriptions, functions, procedures, proposals, methods and/or operating flowcharts of the present disclosure disclosed herein may be applied to various fields requiring wireless communication/connection (e.g., 5G) between devices.

Hereinafter, more detailed illustrations will be presented with reference to drawings. In the drawings/description below, unless otherwise mentioned, the same drawing symbol may illustrate the same or corresponding hardware block, software block or functional block.

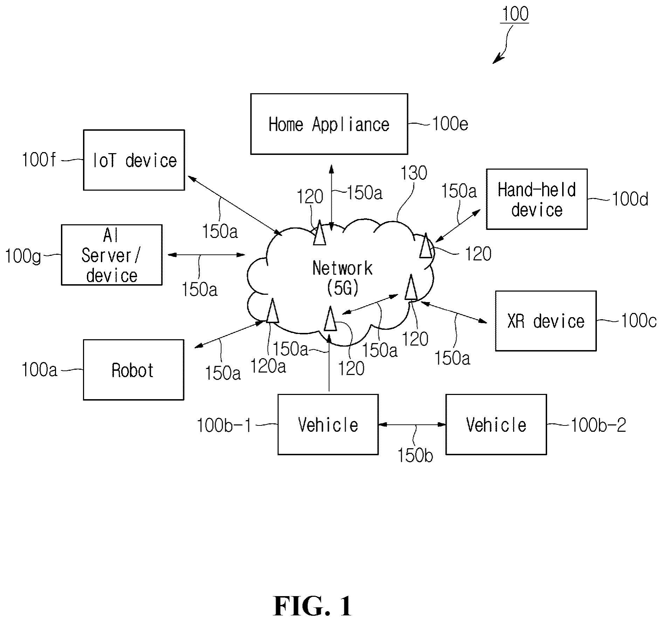

FIG. 1 illustrates an example communication system applicable to the present disclosure.

Referring to FIG. 1, a communication system 100 applied to the present disclosure includes a wireless device, a base station, and a network. Herein, the wireless device means a device performing communication using a wireless connection technology (e.g., 5G NR, LTE) and may be referred to as a communication/wireless/5G device. Without being limited thereto, the wireless device may include a robot 100a, vehicles 100b-1 and 100b-2, an extended reality (XR) device 100c, a hand-held device 100d, a home appliance 100e, an Internet of Thing (IoT) device 100f, and an artificial intelligence (AI) device/server 100g. For example, a vehicle may include a vehicle equipped with a wireless communication function, an autonomous driving vehicle, a vehicle capable of performing vehicle-to-vehicle communication, and the like. Herein, the vehicles 100b-1 and 100b-2 may include an unmanned aerial vehicle (UAV) (e.g., drone). The XR device 100c may include an augmented reality (AR)/virtual reality (VR)/mixed reality (MR) device and may be embodied in forms of a head-up display (HUD) installed in a vehicle, a television, a smartphone, a computer, a wearable device, a home appliance, digital signage, a vehicle, a robot, and the like. The hand-held device 100d may include a smartphone, a smart pad, a wearable device (e.g., a smart watch, smart glasses), a computer (e.g., a notebook and the like) and the like. The home appliance 100e may include a TV, a refrigerator, a washing machine, and the like. The IoT device 100f may include a sensor, a smart meter, and the like. For example, the base station 120 and the network 130 may be embodied as wireless devices, and a specific wireless device 120a may operate as a base station/network node to another wireless device.

The wireless devices 100a to 100f may be connected to the network 130 via the base station 120. AI technology may be applied to the wireless devices 100a to 100f, and the wireless devices 100a to 100f may be connected to the AI server 100g through the network 130. The network 130 may be constructed using a 3G network, a 4G(e.g., LTE) network or a 5G(e.g., NR) network. The wireless devices 100a to 100f may communicate with each other through the base station 120/the network 130 but perform direct communication (e.g., sidelink communication) not through the base station 120/the network 130. For example, the vehicles 100b-1 and 100b-2 may perform direct communication (e.g., vehicle to vehicle (V2V)/vehicle to everything (V2X) communication). In addition, the IoT device 100f (e.g., a sensor) may communicate directly with another IoT device (e.g., a sensor) or another wireless device 100a to 100f.

Wireless communication/connection 150a, 150b and 150c may be made between the wireless devices 100a to 100f/the base station 120 and the base station 120/the base station 120. Herein, wireless communication/connection may be performed through various wireless connection technologies (e.g., 5G NR) such as uplink/downlink communication 150a, sidelink communication 150b (or D2D communication), and base station-to-base station communication 150c (e.g., relay, integrated access backhaul (IAB)). A wireless device and a base station/a wireless device and a base station and a base station may transmit/receive radio signals through the wireless communication/connections 150a, 150b and 150c. For example, the wireless communication/connections 150a, 150b and 150c may transmit/receive a signal through various physical channels. To this end, based on various proposals of the present disclosure, at least a part of various processes of setting configuration information for transmission/reception of a radio signal, various processes of processing a signal (e.g., channel encoding/decoding, modulation/demodulation, resource mapping/demapping, and the like), and a resource allocation process may be performed.

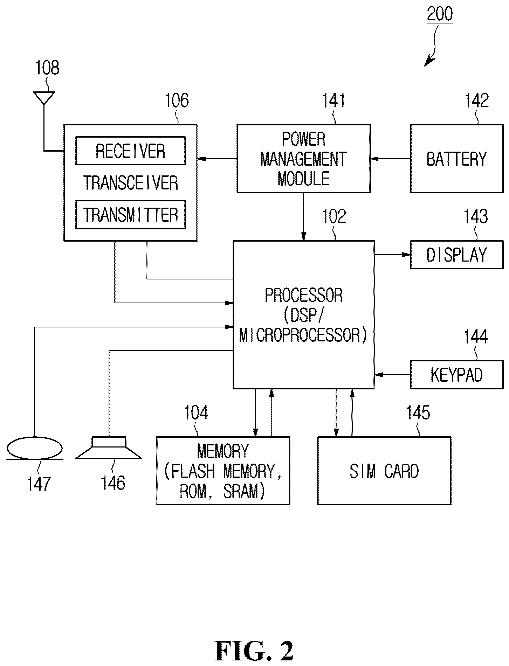

FIG. 2 shows an example of UE to which an implementation of the present specification is applied.

Referring to FIG. 2, a UE 200 may include a processor 202, a memory 204, a transceiver 206, one or more antennas 208, a power management module 241, a battery 242, a display 243, a keypad 244, a subscriber identification module (SIM) card 245, a speaker 246, and a microphone 247.

The processor 202 may be configured to implement a description, a function, a procedure, a proposal, a method and/or an operating flowchart disclosed in the present specification. The processor 202 may be configured to control one or more different components of the UE 200 to implement a description, a function, a procedure, a proposal, a method and/or an operating flowchart disclosed in the present specification. A layer of a wireless interface protocol may be embodied in the processor 202. The processor 202 may include an ASIC, other chipsets, a logic circuit and/or a data processing device. The processor 202 may be an application processor. The processor 202 may include at least one of a DSP, a central processing unit (CPU), a graphics processing unit (GPU), and a modem (modulator and demodulator).

The memory 204 may be coupled operably with the processor 202 and store various information for operating the processor 202. The memory 204 may include a ROM, a RAM, a flash memory, a memory card, a storage medium and/or another storage device. In case of implementation in software, a technology described herein may be implemented using a module (e.g., a procedure, a function, and the like) executing a description, a function, a procedure, a proposal, a method and/or an operating flowchart disclosed in the present specification. The module may be stored in the memory 204 and be executed by the processor 202. The memory 204 may be embodied in the processor 202 or outside the processor 202 in which case the memory 204 may be communicatively coupled with the processor 202 through various methods known in technology.

The transceiver 206 may be operably coupled with the processor 202 and transmit and/or receive a radio signal. The transceiver 206 may include a transmitter and a receiver. The transceiver 206 may include a baseband circuit for processing a radio frequency signal. The transceiver 206 may transmit and/or receive a radio signal by controlling the one or more antennas 208.

The power management module 241 may manage the power of the processor 202 and/or the transceiver 206. The battery 242 may supply power to the power management module 241.

The display 243 may output a result processed by the processor 202. The keypad 244 may receive an input to be used in the processor 202. The keypad 244 may be displayed on the display 243.

The SIM card 245 is an integrated circuit for safely storing an international mobile subscriber identity (IMSI) and a relevant key and may be used to identify and authenticate a subscriber in a hand-held telephone device like a mobile phone or a computer. In addition, contact information may be stored in many SIM cards.

The speaker 246 may output a sounded-related result processed in the processor 202. The microphone 247 may receive a sounded-related input to be used in the processor 202.

In an implement of the present specification, a UE may operate as a transmitting device in an uplink and a receiving device in a downlink. In an implement of the present specification, a base station may operate as a receiving device in a UL and a transmitting device in a DL. In the present specification, a base station may be referred to as a node B (Node B), an eNode B (eNB), and a gNB and may not be limited to a specific form.

In addition, as an example, a UE may be embodied in various forms according to a use example/service. A UE may be configured by various components, devices/parts and/or modules. For example, each UE may include a communication device, a control device, a memory device, and an addition component. A communication device may a communication circuit and a transceiver. For example, a communication circuit may include one or more processors and/or one or more memories. For example, a transceiver may include one or more transceivers and/or one or more antennas. A control device may be electrically coupled with a communication device, a memory device and an additional component and control an overall operation of each UE. For example, a control device may control an electric/mechanical operation of each UE based on a program/a code/an instruction/information stored in a memory device. A control device may transmit information stored in a memory device to the outside (e.g., another communication device) via a communication device through a wireless/wired interface or store information received from the outside (e.g., another communication device) through the wireless/wired interface in the memory device.

An additional component may be configured in various ways according to a type of a UE. For example, an additional component may include at least one of a power device/battery, an input/output (I/O) device (e.g., an audio I/O port, a video I/O port), a driving device, and a computing device. In addition, without being limited thereto, a UE may be embodied in forms of the robot 100a of FIG. 1, the vehicles 100b-1 and 100b-2 of FIG. 1, the XR device 100c of FIG. 1, the hand-held device 100d of FIG. 1, the home appliance 100e of FIG. 1, the IoT device 100f of FIG. 1, a digital broadcast terminal, a hologram device, a public safety device, an MTC device, a medical device, a fintech device (or financial device), a security device, a climate/environment device, the AI server/device 100g of FIG. 1, the base station 120 of FIG. 1, and a network node. A UE may be used a mobile or fixed place according to a use example/service.

Various components, devices/parts and/or all the modules of a UE may be connected to each other through a wired interface, or at least a part thereof may be wirelessly connected through a communication device. In addition, each component, a device/a part and/or a module of a UE may further include one or more components. For example, a control device may be configured by a set of one or more processors. As an example, a control device may be configured by a set of a communication control processor, an application processor (AP), an electronic control unit (ECU), a GPU, and a memory control processor. As anther example, a memory device may be configured by a RAM, a dynamic RAM (DRAM), a ROM, a flash memory, a volatile memory, a non-volatile memory, and/or a combination thereof.

## 5G System Architecture to which the Present Disclosure is Applicable

A 5G system is an advanced technology from 4G LTE mobile communication technology and supports a new radio access technology (RAT), extended long term evolution (eLTE) as an extended technology of LTE, non-3GPP access (e.g., wireless local area network (WLAN) access), etc. through the evolution of the existing mobile communication network structure or a clean-state structure.

The 5G system is defined based on a service, and an interaction between network functions (NFs) in an architecture for the 5G system can be represented in two ways as follows.

Reference point representation: indicates an interaction between NF services in NFs described by a point-to-point reference point (e.g., N11) between two NFs (e.g., AMF and SMF).

Service-based representation: network functions (e.g., AMF) within a control plane (CP) allow other authenticated network functions to access its services. The representation also includes a point-to-point reference point, if necessary.

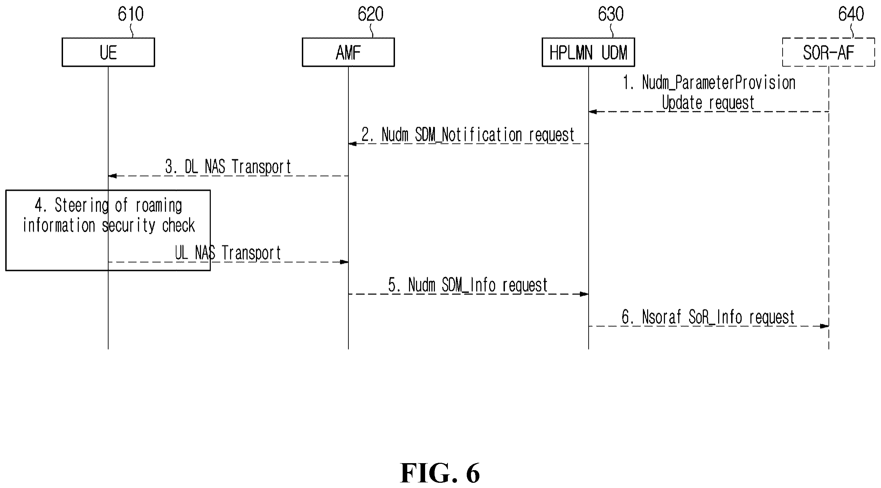

5GC (5G Core) may include various components, part of which are shown in FIG. 6, including an access and mobility management function (AMF), a session management function (SMF), a policy control function (PCF), a Prose user plane function (UPF), an application function (AF), unified data management (UDM), and a non-3GPP interworking function (N3IWF).

A UE is connected to a data network via the UPF through a next generation radio access network (NG-RAN) including the gNB. The UE may be provided with a data service even through untrusted non-3GPP access, e.g., a wireless local area network (WLAN). In order to connect the non-3GPP access to a core network, the N3IWF may be deployed.

The N3IWF performs a function of managing interworking between the non-3GPP access and the 5G system. When the UE is connected to non-3GPP access (e.g., WiFi referred to as IEEE 801.11), the UE may be connected to the 5G system through the N3IWF. The N3IWF performs control signaling with the AMF and is connected to the UPF through an N3 interface for data transmission.

The AMF may manage access and mobility in the 5G system. The AMF may perform a function of managing (non-access stratum) NAS security. The AMF may perform a function of handling mobility in an idle state.

The UPF performs a function of gateway for transmitting and receiving user data. The UPF node 440 may perform the entirety or a portion of a user plane function of a serving gateway (S-GW) and a packet data network gateway (P-GW) of 4G mobile communication.

The UPF is a component that operates as a boundary point between a next generation radio access network (NG-RAN) and the core network and maintains a data path between the gNB and the SMF. In addition, when the UE moves over an area served by the gNB, the UPF serves as a mobility anchor point. The UPF may perform a function of handling a PDU. For mobility within the NG-RAN (which is defined after 3GPP Release-15), the UPF may route packets. In addition, the UPF may also serve as an anchor point for mobility with another 3GPP network (RAN defined before 3GPP Release-15, e.g., universal mobile telecommunications system (UMTS) terrestrial radio access network (UTRAN), evolved (E)-UTRAN or global system for mobile communication (GERAN)/enhanced data rates for global evolution (EDGE) RAN. The UPF may correspond to a termination point of a data interface toward the data network.

The PCF is a node that controls an operator's policy. The AF is a server for providing various services to the UE. The UDM is a server that manages subscriber information, such as home subscriber server (HSS) of 4G mobile communication. The UDM stores and manages the subscriber information in a unified data repository (UDR).

The SMF may perform a function of allocating an Internet protocol (IP) address of the UE. In addition, the SMF may control a packet data unit (PDU) session.

For convenience of explanation, hereinafter, reference numerals may be omitted for AMF, SMF, PCF, UPF, AF, UDM, N3IWF, gNB, or UE, which may operate with reference to contents described in standard documents released earlier than the present document.

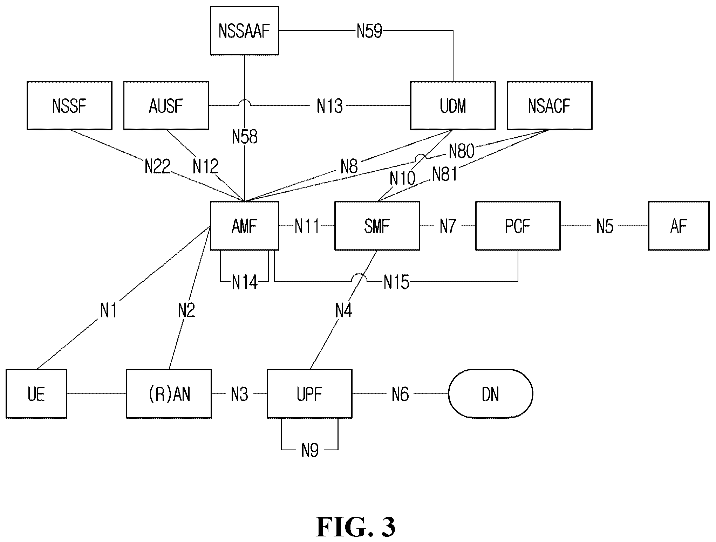

FIG. 3 is a view illustrating an example of functional separation of a typical NG-RAN and a 5th generation core (5GC).

Referring to FIG. 3, a UE is connected to a data network (DN) through a next generation RAN. A control plane function (CPF) node performs all or a part of the functions of a mobility management entity (MME) of 4G mobile communication and all or a part of serving gateway (S-GW) and PDN gateway (P-GW) functions. The CPF node includes AMF and SMF.

A UPF node performs a function of a gateway in which data of a user is transmitted and received.

An authentication server function (AUSF) authenticates and manages a UE. A network slice selection function (NSSF) is a node for network slicing described below.

A network exposure function (NEF) provides a mechanism that safely opens the service and function of 5G core.

Reference points in FIG. 3 are described as follows. N1 represents a reference point between UE and AMF. N2 represents a reference point between (R)AN and AMF. N3 represents a reference point between (R)AN and UPF. N4 represents a reference point between SMF and UPF. N5 represents a reference point between PCF and AF. N6 represents a reference point between UPF and DN. N7 represents a reference point between SMF and PCF. N8 represents a reference point between UDM and AMF. N9 represents a reference point between UPFs. N10 represents a reference point between UDM and SMF. N11 represents a reference point between AMF and SMF. N12 represents a reference point between AMF and AUSF. N13 represents a reference point between UDM and AUSF. N14 represents a reference point between AMFs. N15 represents a reference point between PCF and AMF in a non-roaming scenario and a reference point between AMF and PCF of a visited network in a roaming scenario. N16 represents a reference point between SMFs. N22 represents a reference point between AMF and NSSF. N30 represents a reference point between PCF and NEF. N33 may represent a reference point between AF and NEF, and the above-described entity and interface may be configured with reference to contents described in standard documents released earlier than the present document.

A radio interface protocol is based on the 3GPP radio access network standard. The radio interface protocol is horizontally divided into a physical layer, a data link layer, and a network layer, and is vertically divided into a user plane for transmission of data information and a control plane for transfer of control signal (signaling).

The protocol layers may be divided into L1 (layer-1), L2 (layer-2), and L3 (layer-3) based on the three lower layers of the open system interconnection (OSI) reference model widely known in communication systems.

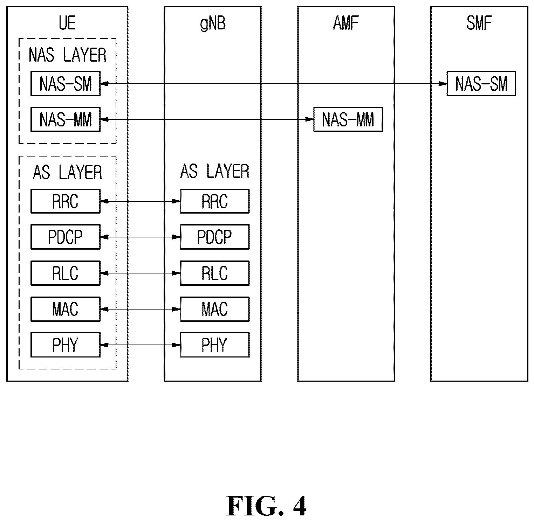

Hereinafter, the present disclosure will describe each layer of a radio protocol. FIG. 4 is a view illustrating an example of a typical architecture of a 5G system.

Referring to FIG. 4, an access stratum (AS) layer may include a physical (PHY) layer, a medium access control layer, a radio link control (RLC) layer, a packet data convergence protocol (PDCP) layer, and a radio resource control (RRC) layer, and an operation based on each layer may be performed with reference to contents described standard documents released earlier than the present document.

A terminal may acquire system information broadcast from a base station and select an adequate cell to camp thereon. Then, the terminal may acquire service-based configuration information and be connected to a network. For example, a public land mobile network (PLMN0 may consist of a mobile country code (MCC) and a mobile network code (MNC). Herein, a home PLMN (HPLMN) may be a PLMN defined in the terminal, and a visited PLMN (VPLMN) may be a PLMN based on a current location. In addition, an equivalent HPLMN (EHPLMN) may refer to a PLMN that is equivalent to an HPLMN, and a list may be stored in a universal subscriber identify module (USIM) of the terminal. The terminal may select a PLMN with a high priority, and PLMN selection may follow one of an automatic mode and a manual mode.

Specifically, when the terminal is turned on or returns to communication coverage from out-of-service coverage, the terminal perform PLMN selection. The terminal may select a PLMN that is registered last or select a PLMN in an HPLMN or EHPLMN list and then register the PLMN to a network. In case the terminal is incapable of accessing an HPLMN or an EPLMN, the terminal may select another PLMN based on priority information stored in the USIM. That is, the terminal may select a PLMN based on priority information of the PLMN.

For example, when selecting a PLMN based on an automatic mode, the terminal may automatically select the PLMN based on a preset priority. Specifically, the terminal may automatically select PLMNs in order to an HPLMN, an EHPLMN, a user PLMN (UPLMN) and other PLMN but may not be limited thereto. As another example, when performing PLMN selection based on a manual mode, the terminal may mark an accessible PLMN list and be connected to a selected PLMN. Herein, a prohibited PLMN may be selected based on PLMN selection, and when registration is successfully performed, the PLMN may not be prohibited any more.

In addition, for example, when selecting a PLMN based on roaming, the terminal may be provided a service not in an HPLMN but in a VPLMN. For example, based on information stored in the USIM, the terminal may be registered to a PLMN outside coverage of an HPLMN (e.g., in another country). For example, the terminal may periodically search for an HPLMN, but a proposed technology is not limited thereto.

In addition, in relation to PLMN selection of a roaming terminal, steering of roaming (SOR) means updating a PLMN/access-technology combination preferred by an HPLMN in a control plane. The terminal may receive the preferred PLMN/access-technology combination and select a PLMN based on a received PLMN/access-technology list. That is, a PLMN priority controlled by an operator in a corresponding access technology (operator controlled PLMN selector with access technology) may be changed to the received PLMN list.

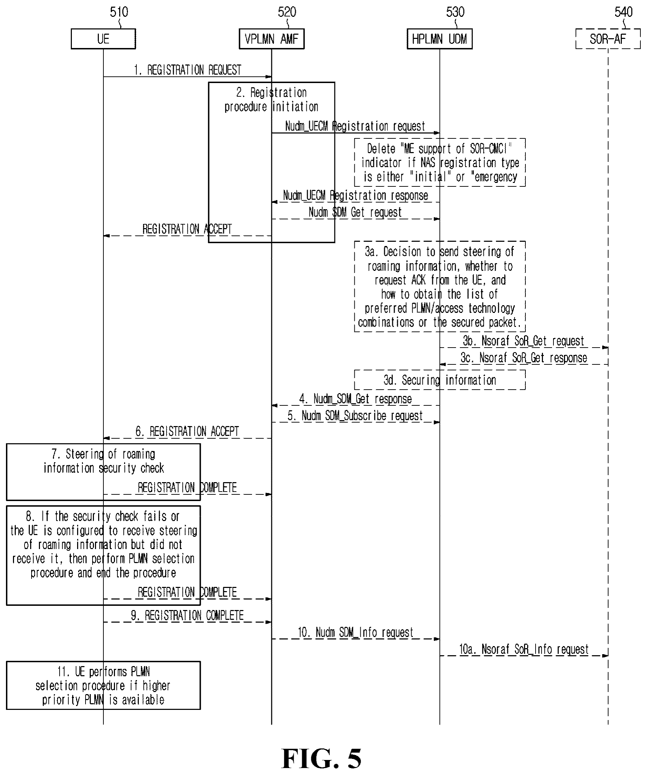

FIG. 5 illustrates an example of a procedure of receiving a PLMN list based on steering of roaming (SOR) in a process where a terminal applicable to the present disclosure is registered to a VPLMN. Referring to FIG. 5, a terminal 510 may transmit a registration request message to a VPLMN AMF 520. The VPLMN AMF 520 may acquire terminal subscription information from an HPLMN UDM 530 and perform a registration procedure. For example, the HPLMN UDM 530 may provide SOR information to the terminal when the terminal is registered to the VPLMN based on a policy of an operator. For example, the HPLMN UDM 530 may acquire a list of preferred PLMN/access technology combinations from an SOR-AF 540 and provide the list to the terminal 510. The terminal 510 may select a PLMN with a high priority based on the received SOR information.

FIG. 6 illustrates an example of a procedure of updating a list of preferred PLMN/access technology combinations applicable to the present disclosure. Referring to FIG. 6, an SOR-AF 640 may deliver an update request message (e.g., Nudm_ParameterProvision_Update_request) to an HPLMN UDM 630 in order to update a list of preferred PLMN/access technology combinations. Next, the HPLMN UDM 630 may deliver information indicating user profile change (e.g., Nudm_SDM_Notification request) to an AMF 620. Herein, the information indicating user profile change may include the above-described SOR information, and the AMF 620 may deliver the information to a terminal 610 through NAS signaling. Herein, the terminal may perform security check on the SOR information, confirm that the SOR information is delivered from the HPLMN, and then deliver a response to the AMF 620 through NAS signaling. Herein, if the SOR information includes the above-described list of preferred PLMN/access technology combinations of the terminal, the terminal may recognize a priority of PLMN selection based on the information.

In addition, for example, based on a request of a NAS of the terminal, an AS of the terminal may search for an available PLMN and report corresponding information to the NAS. For example, the terminal may select a PLMN based on PLMN priority information, find an adequate cell within the PLMN, and camp on the cell. Herein, for example, as for cell selection, the terminal may successfully search for a cell, decode a master information block (MIB) and a system information block (SIB), and perform cell selection if the condition of Formula 1 below is satisfied, and Srxlev and Squal of Formula 1 are defined as shown in Formula 2 and Formula 3 below.

$$[\text{Formula 1}]$$
$$\text{Srxlev} > 0 \text{ AND Squal} > 0$$

$$[\text{Formula 2}]$$
$$\text{Srxlev} = Q_{rxlevmeas} - (Q_{rxlevmin} + Q_{rxlevminoffset}) - P_{compensation} - Q_{offsettemp}$$

[Formula 3]

$$Squal = Q_{qualmeas} - (Q_{qualmin} + Q_{qualminoffset}) - Qoffset_{temp}$$

In addition, the variables in Formula 1 to Formula 3 are defined as shown in Table 1 below.

[Table 1]

| | |
|---|---|
| Srxlev | Cell selection RX level value (dB) |
| Squal | Cell selection quality value (dB) |
| $Qoffset_{temp}$ | Offset temporarily applied to a cell as specified in TS 36.331 [3] (dB) |
| $Q_{rxlevmeas}$ | Measured cell RX level value (RSRP) |
| $Q_{qualmeas}$ | Measured cell quality value (RSRQ) |
| $Q_{rxlevmin}$ | Minimum required RX level in the cell (dBm). $Q_{rxlevmin}$ is obtained from *q-RxLevMin* in SIB1, SIB3, SIB5, or NR SIB5.When the UE who is camped on a NR cell is evaluating an E-UTRA cell, if $Q_{rxlevminoffsetcell}$ is signalled in NR SIB5 in TS 38.331 [37] for the E- |
| | UTRA cell, this cell specific offset is added to *q-RxLevMin* to achieve the required minimum RX level in the E-UTRA cell. |
| $Q_{qualmin}$ | Minimum required quality level in the cell (dB)When the UE who is camped on a NR cell is evaluating an E-UTRA cell, if $Q_{qualminoffsetcell}$ is signalled in NR SIB5 in TS 38.331 [37] for the E-UTRA cell, this cell specific offset is added to achieve the required minimum quality level in the E-UTRA cell. |
| $Q_{rxlevminoffset}$ | Offset to the signalled $Q_{rxlevmin}$ taken into account in the Srxlev evaluation as a result of a periodic search for a higher priority PLMN while camped normally in a VPLMN TS 23.122 [5] |
| $Q_{qualminoffset}$ | Offset to the signalled $Q_{qualmin}$ taken into account in the Squal evaluation as a result of a periodic search for a higher priority PLMN while camped normally in a VPLMN TS 23.122 [5] |
| Pcompensation | If the UE supports the *additionalPmax* in the *NS-PmaxList*, if present, in SIB1, SIB3 and SIB5:$\max(P_{EMAX1} - P_{PowerClass}, 0) - (\min(P_{EMAX2}, P_{PowerClass}) - \min(P_{EMAX1}, P_{PowerClass}))$ (dB); else:<br>if $P_{PowerClass}$ is 14 dBm:<br>$\max(P_{EMAX1} - (P_{PowerClass} - Poffset), 0)$ (dB);<br>else:<br>$\max(P_{EMAX1} - P_{PowerClass}, 0)$ (dB)<br>For IAB-MT, $P_{compensation}$ is set to 0. |
| $P_{EMAX1}, P_{EMAX2}$ | Maximum TX power level an UE may use when transmitting on the uplink in the cell (dBm) defined as $P_{EMAX}$ in TS 36.101 [33]. $P_{EMAX1}$ and $P_{EMAX2}$ are obtained from the *p-Max* and the *NS-PmaxList* respectively in SIB1, SIB3 and SIBS as specified in TS 36.331 [3]. |
| $P_{PowerClass}$ | Maximum RF output power of the UE (dBm) according to the UE power class as defined in TS 36.101 [33] |
| Srxlev | Cell selection RX level value (dB) |
| Squal | Cell selection quality value (dB) |

In addition, for example, in relation to narrowband (NB) IoT, cell selection may be performed if the condition of Formula 4 below is satisfied, and Srxlev and Squal of Formula 4 are defined as shown in Formula 5 and Formula 6 below.

[Formula 4]

$$Srxlev > 0 \text{ AND } Squal > 0$$

[Formula 5]

$$Srxlev = Q_{rxlevmeas} - Q_{rxlevmin} - Pcompensation - Qoffset_{temp}$$

[Formula 6]

$$Squal = Q_{qualmeas} - Q_{qualmin} - Qoffset_{temp}$$

The variables in Formula 4 to Formula 6 are defined as shown in Table 2 below.

Table 2

| | |
|---|---|
| Srxlev | Cell selection RX level value (dB) |
| Squal | Cell selection quality value (dB) |
| Qoffsettemp | Offset temporarily applied to a cell as specified in TS 36.331 [3] (dB) |
| Qrxlevmeas | Measured cell RX level value (RSRP)If RSRP is measured on non-anchor carrier of the cell, the measured RSRP value is translated to Qrxlevmeas as below. Qrxlevmeas = QrxlevmeasNonAnchor - nrs-PowerOffsetNonAnchor. Where QrxlevmeasNonAnchor is the Measured RX level (RSRP) of the non-anchor carrier. |
| Qqualmeas | Measured cell quality value (RSRQ) |
| Qrxlevmin | Minimum required RX level in the cell (dBm)If UE is not authorized for enhanced coverage and Qoffsetauthorization is valid then Qrxlevmin = Qrxlevmin + Qoffsetauthorization. |
| Qqualmin | Minimum required quality level in the cell (dB) |
| Pcompensation | If the UE supports the additionalPmax in the NS-PmaxList-NB, if present, in SIB1-NB, SIB3-NB and SIB5-NB:max(PEMAX1 - PPowerClass, 0) - (min(PEMAX2, PPowerClass) - min(PEMAX1, PPowerClass)) (dB); else: if PPowerClass is 14 dBm: max(PEMAX1 -(PPowerClass - Poffset), 0) (dB); else: max(PEMAX1 -PPowerClass, 0) (dB) |
| PEMAX1, PEMAX2 | Maximum TX power level an UE may use when transmitting on the uplink in the cell (dBm) defined as PEMAX in TS 36.101 [33]. PEMAX1 and PEMAX2 are obtained from the p-Max and the NS-PmaxList-NB respectively in SIB1-NB, SIB3-NB and SIB5-NB as specified in TS 36.331 [3]. |
| PPowerClass | Maximum RF output power of the UE (dBm) according to the UE power class as defined in TS 36.101 [33] |
| Srxlev | Cell selection RX level value (dB) |
| Squal | Cell selection quality value (dB) |
| Qoffset$_{temp}$ | Offset temporarily applied to a cell as specified in TS 36.331 [3] (dB) |
| Q$_{rxlevmeas}$ | Measured cell RX level value (RSRP)If RSRP is measured on non-anchor carrier of the cell, the measured RSRP value is translated to $Q_{rxlevmeas}$ as below. $Q_{rxlevmeas} = Q_{rxlevmeasNonAnchor}$ - *nrs-PowerOffsetNonAnchor.* Where $Q_{rxlevmeasNonAnchor}$ is the Measured RX level (RSRP) of the non-anchor carrier. |
| Q$_{qualmeas}$ | Measured cell quality value (RSRQ) |
| Q$_{rxlevmin}$ | Minimum required RX level in the cell (dBm)If UE is not authorized for enhanced coverage and Qoffset$_{authorization}$ is valid then $Q_{rxlevmin} = Q_{rxlevmin}$ + Qoffset$_{authorization}$. |
| Q$_{qualmin}$ | Minimum required quality level in the cell (dB) |
| Pcompensation | If the UE supports the *additionalPmax* in the *NS-PmaxList-NB*, if present, in SIB1-NB, SIB3-NB and SIB5-NB:max($P_{EMAX1}$ -$P_{PowerClass}$, 0) - (min($P_{EMAX2}$, $P_{PowerClass}$) - min($P_{EMAX1}$, $P_{PowerClass}$)) (dB); |

(continued)

| | else:<br>if $P_{PowerClass}$ is 14 dBm:<br>$\max(P_{EMAX1} -(P_{PowerClass} - \text{Poffset}), 0)$ (dB);<br>else:<br>$\max(P_{EMAX1} -P_{PowerClass}, 0)$ (dB) |
|---|---|
| $P_{EMAX1}$, $P_{EMAX2}$ | Maximum TX power level an UE may use when transmitting on the uplink in the cell (dBm) defined as $P_{EMAX}$ in TS 36.101 [33]. $P_{EMAX1}$ and $P_{EMAX2}$ are obtained from the *p-Max* and the *NS-PmaxList-NB* respectively in SIB1-NB, SIB3-NB and SIB5-NB as specified in TS 36.331 [3]. |
| $P_{PowerClass}$ | Maximum RF output power of the UE (dBm) according to the UE power class as defined in TS 36.101 [33] |

In addition, for example, a terminal may consider a case where a problem occurs to Tx transmission. For example, a T300 timer may be driven based on Tx transmission of the terminal. The terminal may drive the timer when transmitting a RRC connection request message and stop the timer when receiving a RRC connection configuration message as network configuration information. Herein, if the T300 timer is driven and the terminal does not receive the RRC connection configuration message from a network, the timer may expire.

Herein, if the terminal is an NB IoT terminal and the terminal receives an offset temp-related parameter (e.g., connEstFailOffset) in a system information block for NB IoT, the terminal may use a corresponding value for the above-described $Qoffset_{temp}$ in a cell selection and reselection process. On the other hand, if the terminal does not receive the above-described parameter, the above-described $Qoffset_{temp}$ may be set to an infinite value. That is, in case the above-described expiration of the timer causes a problem in Tx transmission, the terminal may configure a cell selection criterion by considering the above-described $Qoffset_{temp}$, but the proposed technology is not limited thereto.

## Concrete embodiments of the present disclosure

In case a terminal performs PLMN selection, the terminal may select a PLMN with a high priority. Priorities may be in the order of an HPLMN, an EHPLMN, a UPLMN and another PLMN. After the terminal selects the PLMN, the terminal may find an adequate cell in the selected PLMN and be camped on the cell. For example, it is possible to consider a case where the HPLMN does not good signal quality and another PLMN has good signal quality. In this situation, the terminal may select the HPLMN based on the priority order, but connection may not be smooth because the signal quality is not good in the HPLMN. Herein, as an existing terminal may be a terminal with mobility and it is possible to move to a cell with good quality and to select PLMN selection based on movement of the terminal, smooth communication may be performed through another cell in the above-described situation.

On the other hand, as a stationary terminal (e.g., a stationary IoT terminal) has no mobility, a problem may occur in the above-described situation. As a concrete example, a stationary terminal may be a stationary Internet of Things (IoT) terminal. As another example, a stationary terminal may be a sensor node. That is, a stationary terminal may be a terminal that does not move and is fixed to a specific location. For example, as a water level measuring device of a high tide alert network, a temperature measuring device for high-voltage line, a power measuring device, a water measuring device, and other devices, stationary devices may be used by being installed in an inaccessible place or deep in an indoor place.

Herein, for example, a local coverage condition may be difficult to satisfy in an area where a stationary terminal is installed. As a concrete example, an SIM used in a stationary terminal is a global SIM that may be used in a plurality of countries. Herein, stationary terminal may be disposed in another country other than a country where an SIM of the stationary terminal is provided. At this time, it may be advantageous for the stationary terminal to select another PLMN with good signal quality instead of an HPLMN with poor signal quality, but the terminal may select the HPLMN based on a priority of the PLMN stored in the SIM. In the above-described situation, the stationary terminal may not smoothly perform communication. In consideration of what is described above, signal level-based network selection may be performed for a stationary terminal. For example, when a terminal selects a network, the terminal needs to determine whether or not to perform PLMN selection based on signal level enhanced network selection (SENSE), and an operation associated with it will be described below. For example, a universal subscriber identity module (USIM) may store an operator-controlled signal threshold per access technology. For example, even when a PLMN has a high priority, a stationary terminal may select a PLMN, which is accessible by a cell with better signal quality than an original signal level, based on an operator-controlled signal threshold per access technology.

Herein, for example, a criterion may be needed for a network to provide an operator-controlled signal threshold per access technology. For example, an operator-controlled signal threshold per access technology may not be determined by any one condition. An operator-controlled signal threshold per access technology may be determined by considering terminal measurement information and other terminal information. For example, a signal threshold may improve performance of a system by utilizing a statistical value of signal strength measurement results of a terminal and a predicted value. However, a surrounding environment of the terminal may be different, and a signal threshold needs to be changed in consideration of a situation of the terminal. Herein, for example, a criterion for determining a signal threshold and an update criterion may be set based on parameters set by an operator, and the signal threshold may be determined based on the criteria.

In addition, for example, an operator-controlled signal threshold per access technology may be indicated to a terminal through the above-described SOR procedure. However, before a signal threshold is configured in a terminal, each of the terminal itself, a USIM in the terminal, and a network entity needs to determine a process or procedure based on which the signal threshold is to be configured in the terminal. For example, in a USIM service table of the USIM, there may be a control plane-based steering value of the terminal in a VPLMN. In an existing SOR procedure, only when use of a corresponding value in a USIM service table is indicated, the SOR procedure may be processed by a corresponding service.

Herein, the corresponding service in the USIM service table may have a same value as terminal subscription information of UDM. As a concrete example, in case a home operator USIM is configured in a terminal (that is, the USIM is opened), a home operator may set the use of a corresponding service in the terminal. Herein, in case the terminal performs initial registration in an HPLMN via a VPLMN, SOR subscription information of UDM of the HPLMN may be used to indicate an SOR container to the terminal through a registration accept message. That is, in case the terminal is provided with an SOR procedure of the VPLMN in a network based on subscription information, the network may provide SOR information to the terminal according to subscription information regarding whether or not SOR is received when the terminal performs initial registration to the VPLMN. For example, as described above, SOR information for the SENSE function may be needed to a stationary terminal, that is, an NB-IoT terminal with a stationary feature. However, in case a stationary terminal with a SOR-SENSE feature performs initial registration, a network does not determine, as information or condition based on initial registration, any information or condition based on which a SOR-SENSE value is to be indicated to the terminal. That is, the network may have to indicate a SOR-SENSE value to the terminal by determining whether or not the terminal is a stationary terminal, and an operation and a procedure for it may be needed. A method for it will be described below.

In addition, in case an HPLMN delivers SENSE-related SOR information to a terminal through a VPLMN, the terminal may perform an operation based on the SENSE-related SOR information. Herein, whether or not the terminal is a stationary terminal is not set in a network but may be a unique feature of the terminal. Accordingly, when acquiring the SENSE-related SOR information, the terminal may need a method of operating by using the information.

For example, a value indicating whether or not a terminal is configured for using SENSE may be signaled. Herein, in case the value is a first value, the value may indicate that the terminal is configured to use SENSE. On the other hand, in case the value is a second value, the value may indicate that the terminal is not configured to use SENSE.

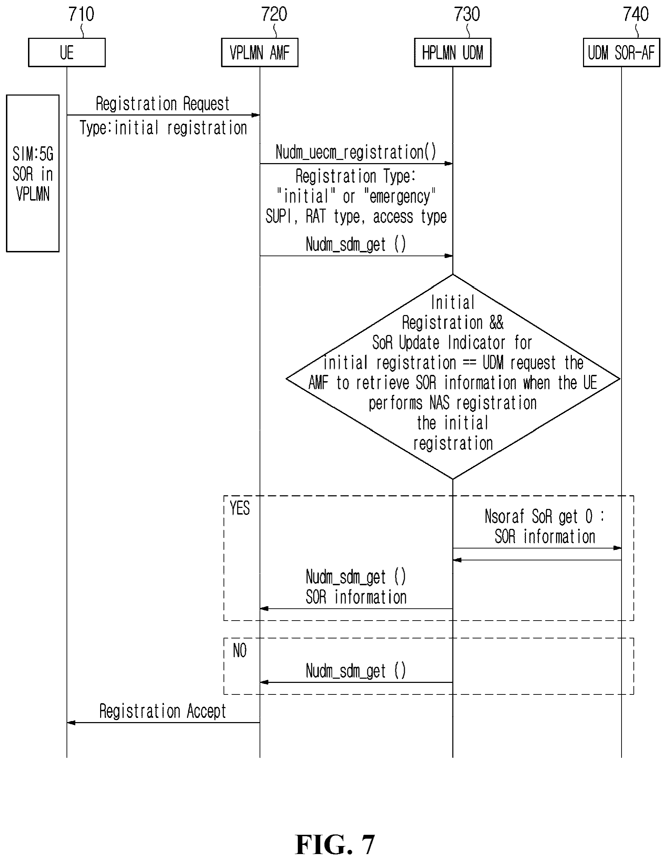

FIG. 7 illustrates an example of a procedure of providing SENSE-related SOR information to a terminal according to an embodiment of the present disclosure. Referring to FIG. 7, a terminal (710) may deliver a registration request to a VPLMN AMF 720. Herein, a registration request type may be initial registration. Next, the VPLMN AMF 720 may transmit the registration request (e.g., Nudm_uecm_registration()) to HPLMN UDM 730. Herein, the registration request type may be initial registration or emergency registration but is not limited to a corresponding embodiment. In addition, the registration request may include SUPI, a RAT type, an access type and other information and is not limited to a specific embodiment. In addition, the VPLMN AMF 720 may transmit "Nudm_sdm_get()" to the HPLMN UDM 730. For example, the HPLMN UDM 730 may request the AMF to provide SOR information when the terminal performs NAS registration based on initial registration. Herein, if the registration request is an initial registration request type and an SOR update indicator for initial registration of the HPLMN UDM 730 is the same as the above-described request, the HPLMN UDM 730 may get a SOR-SENSE value through a SOR-AF 740. Next, the VPLMN AMF 720 may get the SOR-SENSE value from the HPLMN UDM 730. On the other hand, if the HPLMN UDM 730 does not get the SOR-SENSE value from the SOR-AF 740, the VPLMN AMF 720 may not get the SOR-SENSE value from the HPLMN UDM 730. Next, the VPLMN AMF 720 may transmit a registration accept message to the terminal 710.

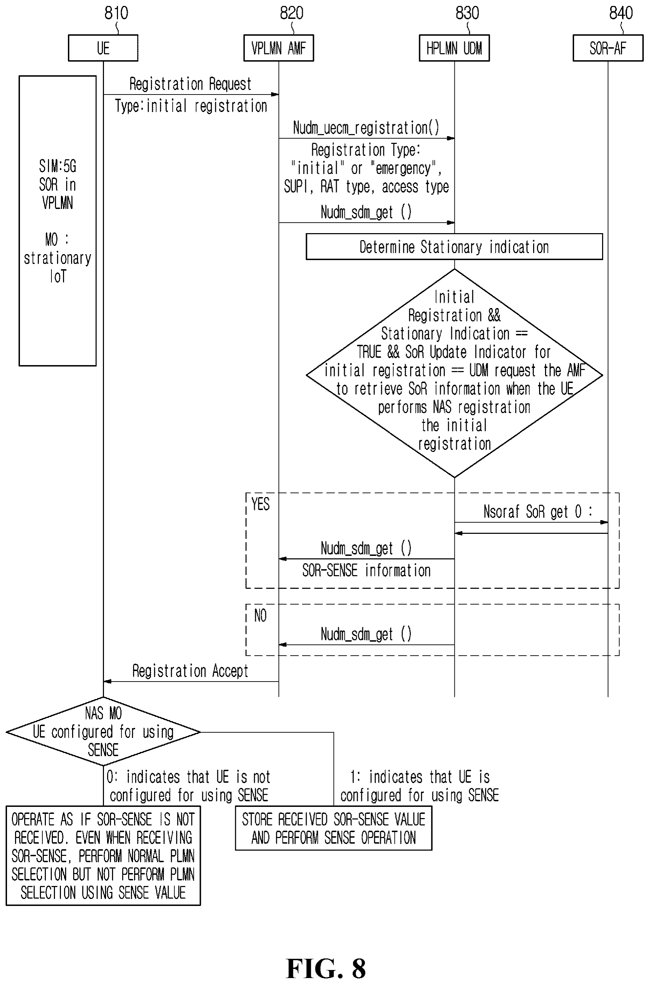

FIG. 8 illustrates an example of a procedure of determining whether or not a terminal is a stationary terminal by a network according to an embodiment of the present disclosure. Referring to FIG. 8, a terminal 810 may deliver a registration request to a VPLMN AMF 820. Herein, a registration request type may be initial registration. Next, the VPLMN AMF 820 may transmit the registration request (e.g., Nudm_uecm_registration()) to HPLMN UDM 830. Herein, the registration request type may be initial registration or emergency registration but is not limited to a corresponding embodiment. In addition, the registration request may include SUPI, a RAT type, an access type and other information and is not limited to a specific embodiment. In addition, the VPLMN AMF 720 may transmit "Nudm_sdm_get()" to the HPLMN UDM 730. Next, the HPLMN UDM 830 may determine whether or not the terminal 810 is a stationary terminal, based on subscription information of the terminal 810 and information received from another network entity. As a concrete example, whether or not a terminal is a stationary terminal may be indicated by a stationary indicator value in an expected terminal behavior parameter of terminal subscription information. For example, if a stationary indicator is a first value, a network may determine the terminal is a stationary terminal. For example, an expected terminal behavior parameter may be feature information on an expected behavior of a terminal or a group terminal. An expected terminal behavior parameter may be provided through an NEF and be provided a part of subscription data. For example, each expected terminal behavior parameter may be associated with a valid time, and the valid time may indicate an expiration time for each parameter.

For example, Table 3 below may show expected terminal behavior parameters, and whether or not a terminal is stationary terminal may be indicated by a stationary indication value among the terminal behavior parameters below, but the proposed technology is not limited thereto.

[Table 3]

| Expected UE Behaviour parameter | Description |
|---|---|
| Expected UE Moving Trajectory | Identifies the UE's expected geographical movement<br>Example: A planned path of movement |
| **Stationary Indication** | **Identifies whether the UE is stationary or mobile** |
| Communication Duration Time | Indicates for how long the UE will normally stay in CM-Connected for data transmission.<br>Example: 5 minutes. |
| Periodic Time | Interval Time of periodic communication<br>Example: every hour. |
| Scheduled Communication Time | Time and day of the week when the UE is available for communication.<br>Example: Time: 13:00-20:00, Day: Monday. |
| Battery Indication | Identifies power consumption criticality for the UE: if the UE is battery powered with not rechargeable/not replaceable battery, battery powered with rechargeable/replaceable battery, or not battery powered. |
| Traffic Profile | Identifies the type of data transmission: single packet transmission (UL or DL), dual packet transmission (UL with subsequent DL or DL with subsequent UL), multiple packets transmission |
| Scheduled Communication Type | Indicates that the Scheduled Communication Type is Downlink only or Uplink only or Bidirectional [To be used together with Scheduled Communication Time]<br>Example: <Scheduled Communication Time>, DL only. |
| Expected Time and Day of Week in Trajectory | Identifies the time and day of week when the UE is expected to be at each location included in the Expected UE Moving Trajectory. |

As another example, whether or not a terminal is a stationary terminal may be determined based on RAT type information received from the VPLMN AMF 820. For example, in case the RAT type information is an IoT type terminal (e.g., "LTE-M", "NB-IoT"), the HPLMN UDM 830 may determine that the terminal is a stationary terminal.

As yet another example, if an expected terminal mobility (expected UE mobility) value in core network assisted RAN parameter tuning information, which is notified by the VPLMN AMF 820 through a RAN parameter, indicates that a terminal is a stationary terminal, the HPLMN UDM 830 may determine that the terminal is a stationary terminal. The core network assisted RAN parameter tuning information may enable a RAN to minimize terminal state transition and support an optimal network operation. The core network assisted RAN parameter tuning information may be derived for each terminal by an AMF, and whether or not a terminal is a stationary terminal may be indicated based on a terminal mobility value in the information.

As yet another example, in case a RAN indicates through an AMF that a terminal transmits a cell selection criterion for a stationary terminal, the HPLMN UDM 830 may determine that the terminal is a stationary terminal. For example, in case a RAN indicates the criterion values of Table 4 below to a terminal, a network may determine that the terminal is a stationary terminal.

Herein, the relaxed monitoring criterion, the relaxed measurement criterion for a stationary RedCap terminal, and the relaxed measurement criterion for a stationary RedCap terminal not located in a cell edge may be described as in Table 5 to Table 7 respectively, but the proposed technology is not limited thereto.

Table 4]

| |
|---|
| - Relaxed monitoring criterion<br>- Relaxed measurement criterion for a stationary RedCap UE<br>- Relaxed measurement criterion for a stationary RedCap UE not a cell edge |

[Table 5]

| |
|---|
| The relaxed monitoring criterion is fulfilled when:<br>- $(Srxlev_{Ref} - Srxlev) < S_{SearchDeltaP}$<br>Where:<br>- Srxlev = current Srxlev value of the serving cell (dB).<br>- $Srxlev_{Ref}$ = reference Srxlev value of the serving cell (dB), set as follows:<br>- After selecting or reselecting a new cell, or<br>- If $(Srxlev - Srxlev_{Ref}) > 0$, or<br>- If the relaxed monitoring criterion has not been met for $T_{SearchDeltaP:}$<br>- the UE shall set the value of $Srxlev_{Ref}$ to the current Srxlev value of the serving cell;<br>- $T_{SearchDeltaP}$ = 5 minutes, or the eDRX cycle length if eDRX is configured and the eDRX cycle length is longer than 5 minutes. |

[Table 6]

| |
|---|
| Relaxed measurement criterion for a stationary RedCap UE<br>The relaxed measurement criterion for a stationary RedCap UE is fulfilled when:<br>- (SrxlevRefStationary - Srxlev) < SSearchDeltaP-Stationary,<br>Where:<br>- Srxlev = current Srxlev value of the serving cell (dB).<br>- SrxlevRefStationary = reference Srxlev value of the serving cell (dB), set as follows:<br>- After selecting or reselecting a new cell, or<br>- If (Srxlev - SrxlevRefStationary) > 0, or<br>- If the relaxed measurement criterion has not been met for TSearchDeltaP-Stationary:<br>- The UE shall set the value of SrxlevRefStationary to the current Srxlev value of the serving cell. |

[Table 7]

| |
|---|
| Relaxed measurement criterion for a stationary RedCap UE not at cell edge The relaxed measurement criterion for a stationary RedCap UE not at cell edge is fulfilled when:<br>- the relaxed measurement criterion in clause 5.2.4.9.3 is fulfilled for a period of TSearchDeltaP-Stationary,<br>- Srxlev > SSearchThresholdP2, and,<br>- Squal > SSearchThresholdQ2, if SSearchThresholdQ2 is configured.<br>Where:<br>- Srxlev = current Srxlev value of the serving cell (dB).<br>- Squal = current Squal value of the serving cell (dB). |

As yet another example, the HPLMN UDM 830 may determine whether or not the corresponding terminal is a stationary terminal by using subscription information of the terminal and information received from another network entity.

For example, in case the HPLMN UDM 830 determines that the terminal is a stationary terminal, when the terminal performs NAS registration based on initial registration, the HPLMN UDM 830 may request the AMF to provide SOR information. Herein, if the registration request is an initial registration request type and an SOR update indicator for initial registration of the HPLMN UDM 830 is the same as the above-described request, the HPLMN UDM 830 may get a SOR-SENSE value through a SOR-AF 840. Next, the VPLMN AMF 820 may get the SOR-SENSE value from the HPLMN UDM 830. Next, the VPLMN AMF 820 may transmit a registration accept message to the terminal 810.

Herein, for example, the HPLMN UDM 830 may acquire the SOR-SENSE value only when the terminal is a stationary terminal. As another example, the HPLMN UDM 830 may acquire the SOR-SENSE value from the SOR-AF 840, and this is the same as described above. To acquire the SOR-SENSE value from the SOR-AF 840, the HPLMN UDM 830 may indicate in "NSoraf_SOR_get()" whether or not the terminal is a stationary terminal.

In addition, the VPLMN AMF 820 may provide information that enables the HPLMN UDM 830 to determine whether or not the terminal is a stationary terminal. For example, the VPLMN AMF 820 may deliver information of Table 8 below to the HPLMN UDM 830.

Specifically, the VPLMN AMF 820 may deliver, as mobility information of the terminal (expected UE mobility), information indicating whether the terminal is a stationary terminal or a mobile terminal to the HPLMN UDM 830.

In addition, the VPLMN AMF 820 may deliver indicator information indicating whether or not the terminal is a stationary terminal to the HPMLM UDM 830 but is not limited to this embodiment.

[Table 8]

| |
|---|
| - Expected UE mobility : <br> whether the UE is expected to be stationary or mobile (Core Network assisted RAN parameter tuning) <br> - Stationary indication : <br> identifies whether the UE is stationary or mobile (Expected UE behaviour parameter) |

In addition, for example, a RAN may indicate, through an AMF, information necessary to determine whether or not a terminal is a stationary terminal to UDM so that the UDM can determine whether or not the terminal is a stationary terminal. For example, the RAN may deliver the above-described information of Table 4 to the UDM through the AMF. Specifically, in case the RAN transmits a measurement criterion value for cell selection to a terminal, the RAN may deliver the above-described information of Table 4 to the UDM through the AMF. More specifically, the RAN may indicate, through the AMF, at least any one of a measurement criterion value for a stationary RedCap terminal, a measurement criterion value for a stationary RedCap terminal not located in a cell edge, and a monitoring criterion value, and this may be the same as the above-described Table 4 to Table 8.

In addition, as a network entity, a SOR-AF may acquire information regarding whether or not a terminal is a stationary terminal from UDM. The SOR-AF may indicate a threshold value for indicating a SOR-SENSE value to the terminal. Specifically, in case the terminal requests initial registration and acquires an indicator for receiving control plane (CP)-SOR from a VPLMN and the terminal is a stationary terminal, the SOR-AF may indicate a threshold value for indicating the SOR-SENSE value to the terminal.

Herein, when the terminal receives SOR-SENSE information, the terminal stores the SOR-SENSE information and then performs PLMN selection through a SENSE feature. Specifically, in case the terminal has a value of terminal (UE) configured using SENSE set to the above-described first value in a NAS measurement object (MO) configuration, the terminal may store the SOR-SENSE information and then perform PLMN selection by using a SENSE feature. That is, in case it is indicated that the terminal is configured as a terminal using SENSE in a NAS MO configuration, the terminal may store the SOR-SENSE information and perform PLMN selection through a SENSE feature.

On the other hand, in case the terminal has a value of terminal (UE) configured using SENSE set to a second value in a NAS measurement object (MO) configuration, the terminal may not use the SOR-SENSE information. The terminal may perform an existing PLMN selection operation without applying a SOR-SENSE value. That is, in case it is indicated through the second value in a NAS MO configuration that the terminal is configured as a terminal not using SENSE, the terminal may not use the SOR-SENSE information but perform the existing PLMN selection operation.

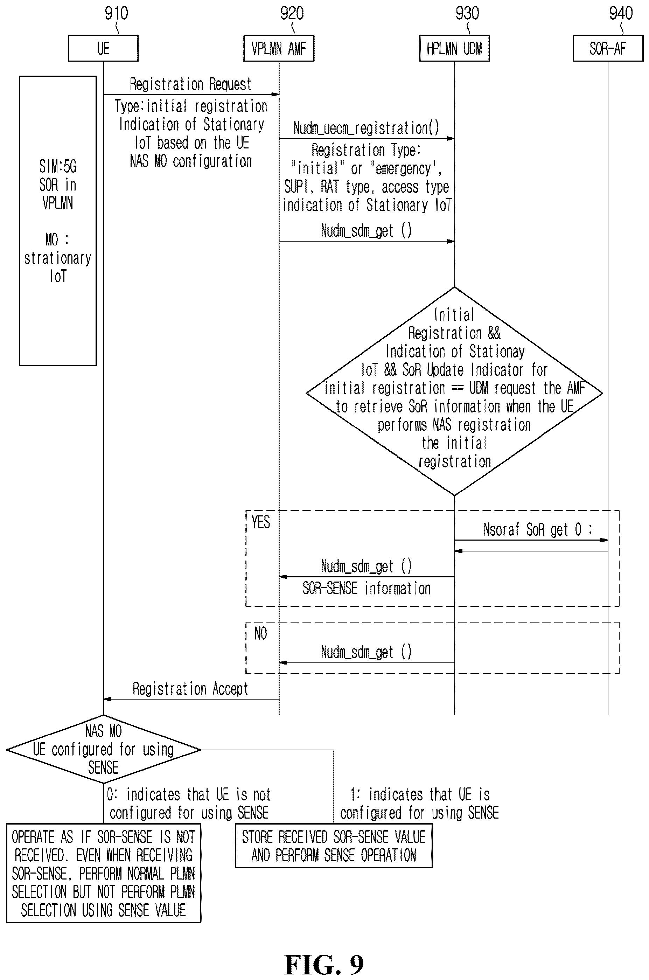

FIG. 9 illustrates an example of a procedure of indicating by a terminal according to an embodiment of the present disclosure to a network regarding whether or not the terminal is a stationary terminal. Referring FIG. 9, a terminal 910 may indicate whether or not the terminal is a stationary terminal to a network. Based on a value regarding whether or not the terminal is a stationary terminal, which is indicated by the terminal, a network entity may indicate a SOR-SENSE value to the terminal 910. Specifically, the terminal may indicate that the terminal is a stationary terminal, by setting a value of terminal (UE) configured for using SENSE to a first value in a NAS MO configuration. Herein, if the value is the first value, the value may indicate that the terminal is a terminal configured to use SENSE.

As another example, in case a terminal is at least any one of "NB-IoT", "GERAN EC-GSM-IoT" and "Category M1 or M2 of E-UTRA" or a combination thereof, a network may recognize that the terminal is a stationary terminal. That is, based on a RAT type of the terminal, the network may determine for a specific terminal type that the terminal is a stationary terminal.

As another example, a terminal may belong to the above-described terminal type and indicate that the terminal is a stationary terminal by setting a value of terminal (UE) configured for using SENSE to a first value in a NAS MO configuration, but may not be limited to a specific embodiment.

Herein, a stationary terminal indictor, which indicates that a terminal is a stationary terminal, may be included in a registration request message that is delivered to a VPLMN AMF 920. In addition, the VPLMN AMF 920 may include the stationary terminal indicator in a SOR transparent container form in a registration complete message and deliver the stationary terminal indicator to an HPLMN UDM 930.

For example, in case the HPLMN UDM 930 indicates that the terminal is a stationary terminal, when the terminal performs NAS registration based on initial registration, the HPLMN UDM 930 may request the AMF to provide SOR information. Herein, if a registration request is an initial registration request type and a SOR update indicator for initial registration of the HPLMN UDM 930 is the same as the above-described request, the HPLMN UDM 930 may get a SOR-SENSE value through a SOR-AF 940. Next, the VPLMN AMF 920 may get the SOR-SENSE value from the HPLMN UDM 930. Next, the VPLMN AMF 920 may transmit a registration accept message to the terminal 910.

Herein, for example, only when the terminal is a stationary terminal, the HPLMN UDM 930 may acquire a SOR-SENSE value. As another example, the HPLMN UDM 930 may acquire it from the SOR-AF 940, which is the same as described above. In order to acquire the SOR-SENSE value from the SOR-AF 940, the HPLMN UDM 930 may indicate in "NSoraf_SOR_get()" whether or not the terminal is a stationary terminal.

That is, the VPLMN AMF 920 may indicate to the HPLMN UDM 930 whether or not the terminal 910 is a stationary terminal, and based on whether or not the terminal 910 is a stationary terminal, the HPLMN UDM 930 may retrieve a SOR-SENSE value from the SOR-AF 940, and this is the same as described above.

As another example, in case the UDM 930 receives a provisioning update request from the SOR-AF 940, a terminal may check whether or not a target of provisioning update is a stationary terminal, thereby determining whether or not provisioning is to be performed. For example, based on subscription information of a terminal, in case the terminal is a stationary terminal and provisioning is to be performed only for a stationary terminal, the UDM 930 may determine whether or not the terminal is a stationary terminal and then update a provisioning value only for the stationary terminal. For example, in case the UDM 930 fails in provisioning update, the UDM may indicate failure as a provisioning update response to the SOR-AF 940 and indicate by a reason value that the terminal is not a stationary terminal.

In addition, as a network entity, the SOR-AF 940 may acquire from the UDM 930 information regarding whether or not a terminal is a stationary terminal. The SOR-AF 940 may indicate to the terminal 910 a threshold value for indicating a SOR-SENSE value. Specifically, in case a terminal requests initial registration and acquires an indicator for receiving CP-SOR from a VPLMN and the terminal is a stationary terminal, the SOR-AF 940 may indicate a threshold value for indicating a SOR-SENSE value to the terminal 910.

Herein, when receiving SOR-SENSE information, a terminal may store the SOR-SENSE information and then perform PLMN selection through a SENSE feature. Specifically, if a value of terminal (UE) configured for using SENSE is set to a first value in a NAS MO configuration, the terminal may store the SOR-SENSE information and then perform PLMN selection through the SENSE feature. That is, in case it is indicated in the NAS MO configuration that the terminal is configured as a terminal using SENSE, the terminal may store the SOR-SENSE information and perform PLMN selection through the SENSE feature.

On the other hand, if the value of terminal (UE) configured for using SENSE is set to a second value in the NAS MO configuration, the terminal may not use the SOR-SENSE information. The terminal may perform an existing PLMN selection operation without applying a SOR-SENSE value. That is, in case it is indicated in the NAS MO configuration that the terminal is configured as a terminal not using SENSE, the terminal may not use the SOR-SENSE information but perform the existing PLMN selection operation.

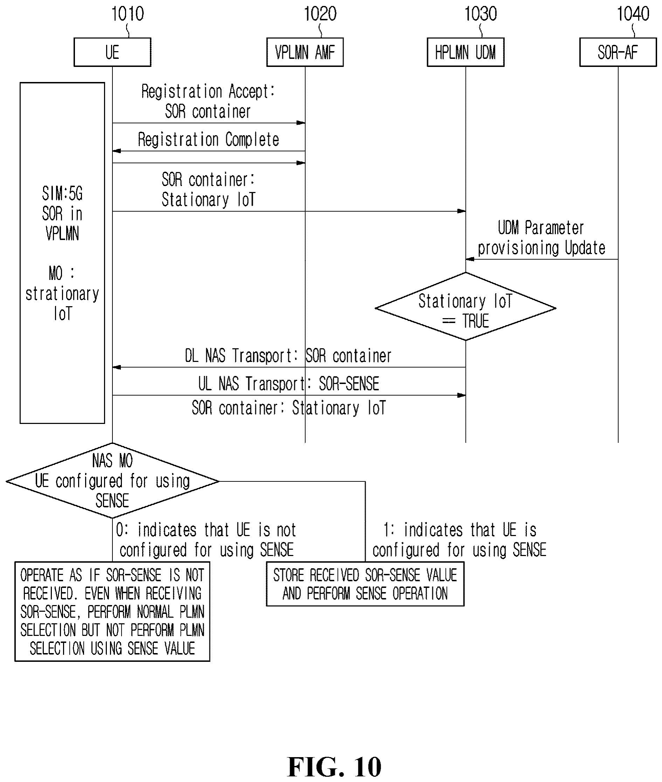

FIG. 10 illustrates an example of a procedure of indicating by a terminal according to an embodiment of the present disclosure to a network regarding whether or not the terminal is a stationary terminal. Referring to FIG. 10, a terminal 1010 may indicate whether or not the terminal is a stationary terminal to a network through a SOR container in a UL NAS transport message or a SOR container in a registration complete message. For example, whether or not the terminal is a stationary terminal may be indicated through a value of terminal (UE) configured for using SENSE in a NAS MO configuration. For example, the terminal 1010 may indicate to UDM 1030 whether or not the terminal is a stationary terminal. The UDM 1030 may determine through the value whether or not the terminal is a stationary terminal and then acquire a SOR-SENSE value from a SOR-AF 1040.

As another example, in case the UDM 1030 receives a provisioning update request from the SOR-AF 1040, the UDM 1030 may check whether or not a target of provisioning update is a stationary terminal, thereby determining whether or not provisioning is to be performed. For example, based on subscription information of a terminal, in case the terminal is a stationary terminal and provisioning is to be performed only for a stationary terminal, the UDM 1030 may determine whether or not the terminal is a stationary terminal and then update a provisioning value only for the stationary terminal. For example, in case the UDM 1030 fails in provisioning update, the UDM 1030 may indicate failure as a provisioning update response to the SOR-AF 1040 and indicate by a reason value that the terminal is not a stationary terminal.

In addition, as a network entity, the SOR-AF 1040 may acquire from the UDM 1030 information regarding whether or not a terminal is a stationary terminal. The SOR-AF 1040 may indicate to the terminal 1010 a threshold value for indicating a SOR-SENSE value. Specifically, in case a terminal requests initial registration and acquires an indicator for receiving CP-SOR from a VPLMN and the terminal is a stationary terminal, the SOR-AF 1040 may indicate a threshold value for indicating a SOR-SENSE value to the terminal 1010.

Herein, when receiving SOR-SENSE information, a terminal may store the SOR-SENSE information and then perform PLMN selection through a SENSE feature. Specifically, if a value of terminal (UE) configured for using SENSE is set to a first value in a NAS MO configuration, the terminal may store the SOR-SENSE information and then perform PLMN selection through the SENSE feature. That is, in case it is indicated in the NAS MO configuration that the terminal is configured as a terminal using SENSE, the terminal may store the SOR-SENSE information and perform PLMN selection through the SENSE feature.

On the other hand, if the value of terminal (UE) configured for using SENSE is set to a second value in the NAS MO configuration, the terminal may not use the SOR-SENSE information. The terminal may perform an existing PLMN selection operation without applying a SOR-SENSE value. That is, in case it is indicated in the NAS MO configuration that the terminal is configured as a terminal not using SENSE, the terminal may not use the SOR-SENSE information but perform the existing PLMN selection operation.

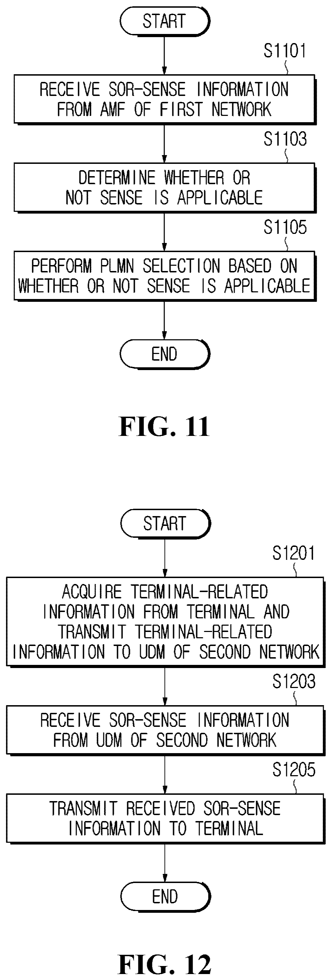

FIG. 11 illustrates an example of a procedure of operating a terminal according to an embodiment of the present disclosure. FIG. 11 exemplifies a method performed by a terminal.

Referring to FIG. 11, at step S1101, a terminal receives SOR-SENSE information from an AMF of a first network. Herein, the first network may be a VPLMN but is not limited thereto. For example, the AMF of the first network may receive SOR-SENSE information from UDM of a second network and deliver the SOR-SENSE information to the terminal. Herein, the second network may be an HPLMN, but the proposed technology is not limited thereto.

At step S1103, the terminal determines whether or not SENSE is applicable. At step S1105, the terminal performs PLMN selection based on whether or not SENSE is applicable. Herein, if SENSE is applicable, the terminal may perform PLMN selection based on a signal threshold. On the other hand, if SENSE is inapplicable, the terminal may perform PLMN selection based on a priority order.

For example, the signal threshold may be an operator controlled signal threshold per access technology based on signal level-based network selection, and this is the same as described above. In addition, the terminal may select a PLMN with a higher priority among PLMNs with a larger signal than the signal threshold and be camped on a cell within the selected PLMN. In addition, the signal threshold may be indicated by being configured for each terminal based on terminal location information.

As another example, the terminal may deliver at least any one of terminal type indication information and terminal subscription information to the AMF of the first network. Based on terminal type indication information and terminal subscription information, if the terminal is an Internet of things (IoT) terminal, the AMF may deliver the terminal type indication information and the terminal subscription information to the UDM of the second network. Next, the UDM of the second network may deliver the SOR-SENSE information to the AMF of the first network, when determining that the terminal is a stationary IoT terminal, based on the terminal type indication information and the terminal subscription information. If the UDM of the second network determines that the terminal is a stationary IoT terminal, the UDM of the second network may acquire the SOR-SENSE information from a SOR-application function (AF) of the first network and deliver the SOR-SENSE information to the AMF of the first network.

As another example, the terminal may deliver indication information indicating that the terminal is a stationary IoT terminal to the AMF of the first network, and the UDM of the second network may determine that the terminal is a stationary IoT terminal, based on indication information from the AMF of the first network. Herein, the indication information may be delivered from the terminal to the AMF of the first network based on a NAS MO configuration. As another example, the indication information may be delivered from the terminal to the UDM of the second network based on a SOR container.

FIG. 12 illustrates an example of an example of a procedure of operating a node according to an embodiment of the present disclosure. FIG. 12 exemplifies a method performed by a network node that belongs to a first network.

Referring to FIG. 12, at step S1201, a network node acquires terminal-related information from a terminal and transmits the terminal-related information to UDM of a second network. Herein, the network node belongs to the first network node, the first network may be a VPLMN, and the second network may be an HPLMN.

At step S1203, the network node receives SOR-SENSE information from the UDM of the second network. At step S1205, the network node transmits the received SOR-SENSE information to the terminal. For example, the terminal performs PLMN selection by determining whether or not SENSE is applicable, and if SENSE is applicable to the terminal, PLMN selection may be performed based on a signal threshold, and if SENSE is inapplicable to the terminal, PLMN selection may be performed based on a priority order. For example, the signal threshold may be an operator controlled signal threshold per access technology based on signal level-based network selection, and this is the same as described above. In addition, the terminal may select a PLMN with a higher priority among PLMNs with a larger signal than the signal threshold and be camped on a cell within the selected PLMN. In addition, the signal threshold may be indicated by being configured for each terminal based on terminal location information.

As another example, the terminal may deliver at least any one of terminal type indication information and terminal subscription information to the AMF of the first network. Based on terminal type indication information and terminal subscription information, if the terminal is an Internet of things (IoT) terminal, the AMF may deliver the terminal type indication information and the terminal subscription information to the UDM of the second network. Next, the UDM of the second network may deliver the SOR-SENSE information to the AMF of the first network, when determining that the terminal is a stationary IoT terminal, based on the terminal type indication information and the terminal subscription information. After the UDM of the second network determines that the terminal is a stationary IoT terminal, the UDM of the second network may acquire the SOR-SENSE information from a SOR-application function (AF) of the first network and deliver the SOR-SENSE information to the AMF of the first network.

As another example, the terminal may deliver indication information indicating that the terminal is a stationary IoT terminal to the AMF of the first network, and the AMF of the first network may determine that the terminal is a stationary IoT terminal, based on indication information to the UDM of the second network. Herein, the indication information may be delivered from the terminal to the AMF of the first network based on a NAS MO configuration. As another example, the indication information may be delivered from the terminal to the UDM of the second network based on a SOR container.

As the examples of the proposal method described above may also be included in one of the implementation methods of the present disclosure, it is an obvious fact that they may be considered as a type of proposal methods. In addition, the proposal methods described above may be implemented individually or in a combination (or merger) of some of them. A rule may be defined so that information on whether or not to apply the proposal methods (or information on the rules of the proposal methods) is notified from a base station to a terminal through a predefined signal (e.g., a physical layer signal or an upper layer signal).

The present disclosure may be embodied in other specific forms without departing from the technical ideas and essential features described in the present disclosure. Therefore, the above detailed description should not be construed as limiting in all respects and should be considered as an illustrative one. The scope of the present disclosure should be determined by rational interpretation of the appended claims, and all changes within the equivalent scope of the present disclosure are included in the scope of the present disclosure. In addition, claims having no explicit citation relationship in the claims may be combined to form an embodiment or to be included as a new claim by amendment after filing.

## Industrial Applicability

The embodiments of the present disclosure are applicable to various radio access systems. Examples of the various radio access systems include a $3^{rd}$ generation partnership project (3GPP) or 3GPP2 system.

The embodiments of the present disclosure are applicable not only to the various radio access systems but also to all technical fields, to which the various radio access systems are applied. Further, the proposed methods are applicable to mmWave and THzWave communication systems using ultrahigh frequency bands.

Additionally, the embodiments of the present disclosure are applicable to various applications such as autonomous vehicles, drones and the like.

## Claims

1. A method performed by a terminal in a wireless communication system, the method comprising:

   transmitting a registration request message;
   receiving a registration accept message including steering of roaming (SOR)-signal level enhanced network selection (SENSE) information from an access management function (AMF) of a first network, wherein the AMF of the first network receives the SOR-SENSE information from a unified data management (UDM) of a second network;
   transmitting a registration complete message;
   determining whether or not SENSE is applicable based on the SOR-SENSE information; and
   performing public land mobile network (PLMN) selection based on whether or not the SENSE is applicable,
   wherein, based on the SENSE being applicable to a terminal, the PLMN selection is performed based on a signal threshold, and
   wherein, based on the SENSE being inapplicable to the terminal, the PLMN selection is performed based on a priority order.

2. The method of claim 1, wherein the signal threshold comprises an operator controlled signal threshold per access technology based on signal level-based network selection.

3. The method of claim 2, wherein the terminal selects a public land mobile network (PLMN) with a high priority among PLMNs with a larger signal than the signal threshold and is camped on a cell within the selected PLMN.

4. The method of claim 3, wherein the signal threshold is indicated by being configured for each terminal based on terminal location information.

5. The method of claim 1, wherein the terminal delivers at least any one of terminal type indication information and terminal subscription information to the AMF of the first network, and
wherein, based on the terminal being a stationary Internet of things (IoT) terminal based on the terminal type indication information and the terminal subscription information, the AMF delivers the terminal type indication information and the terminal subscription information to the UDM of the second network.

6. The method of claim 5, wherein, based on the UDM of the second network determining that the terminal is the stationary IoT terminal based on the terminal type indication information and the terminal subscription information, the UDM of the second network delivers the SOR-SENSE information to the AMF of the first network.

7. The method of claim 6, wherein, based on the UDM of the second network determining that the terminal is the stationary IoT terminal, the UDM of the second network acquires the SOR-SENSE information from a SOR-application function (AF) of the first network and delivers the SOR-SENSE information to the AMF of the first network.

8. The method of claim 1, wherein the terminal delivers indication information indicating that the terminal is a stationary IoT terminal to the AMF of the first network, and the UDM of the second network determines that the terminal is the stationary IoT terminal, based on the indication information from AMF of the first network.

9. The method of claim 8, wherein the indication information is delivered from the terminal to the AMF of the first network based on a non-access stratum (NAS) measurement object (MO) configuration.

10. The method of claim 8, wherein the indication information is delivered from the terminal to the UDM of the second network based on a SOR container.

11. A method performed by a node of a first network in a wireless communication system, the method comprising:

acquiring terminal-related information from a terminal and transmitting the terminal-related information to UDM of a second network;
receiving SOR-SENSE information from the UDM of the second network; and
transmitting the received SOR-SENSE information to the terminal,
wherein the terminal performs PLMN selection based on whether or not SENSE is applicable, and based on SENSE being applicable to the terminal, the PLMN selection is performed based on a signal threshold, and based on SENSE being inapplicable to the terminal, the PLMN selection is performed based on a priority order.

12. A terminal in a wireless communication system, the terminal comprising:

a transceiver; and
a processor coupled with the transceiver,
wherein the processor is configured to:

receive roaming (SOR)-signal level enhanced network selection (SENSE) information from an access management function (AMF) of a first network, wherein the AMF of the first network receives the SOR-SENSE information from a unified data management (UDM) of a second network,
determine whether or not SENSE is applicable, and
perform public land mobile network (PLMN) selection based on whether or not the SENSE is applicable, wherein, based on the SENSE being applicable to the terminal, the PLMN selection is performed based on a signal threshold, and
wherein, based on the SENSE being inapplicable to the terminal, the PLMN selection is performed based on a priority order.

13. A first network node in a wireless communication system, the first network node comprising:

a transceiver; and
a processor coupled with the transceiver,
wherein the processor is configured to:

acquire terminal-related information from a terminal and transmit the terminal-related information to a unified data management (UDM) of a second network,

receive roaming (SOR)-signal level enhanced network selection (SENSE) information from the UDM of the second network, and

transmit the received SOR-SENSE information to the terminal,

wherein the terminal performs public land mobile network (PLMN) selection by determining whether or not SENSE is applicable, and

wherein, based on the SENSE being applicable to the terminal, the PLMN selection is performed based on a signal threshold, and based on the SENSE being inapplicable to the terminal, the PLMN selection is performed based on a priority order.

14. A communication device comprising:

at least one processor; and

at least one computer memory coupled with the at least one processor and storing an instruction that instructs operations when executed by the at least one processor,

wherein the operations includes:

receiving, by a terminal, steering of roaming (SOR)-signal level enhanced network selection (SENSE) information from an access management function (AMF) of a first network, wherein the AMF of the first network receives the SOR-SENSE information from a unified data management (UDM) of a second network;

determining, by the terminal, whether or not SENSE is applicable; and

performing public land mobile network (PLMN) selection based on whether or not the SENSE is applicable,

wherein, based on the SENSE being applicable to the terminal, the PLMN selection is performed based on a signal threshold, and

wherein, based on the SENSE being inapplicable to the terminal, the PLMN selection is performed based on a priority order.

15. A non-transitory computer-readable medium storing at least one instruction, the non-transitory computer-readable medium comprising the at least one instruction that is executable by a processor,

wherein the at least one instruction controls a device to:

receive roaming (SOR)-signal level enhanced network selection (SENSE) information from an access management function (AMF) of a first network, wherein the AMF of the first network receives the SOR-SENSE information from a unified data management (UDM) of a second network,

determine whether or not SENSE is applicable, and

perform public land mobile network (PLMN) selection based on whether or not the SENSE is applicable,

wherein, based on the SENSE being applicable to the terminal, the PLMN selection is performed based on a signal threshold, and

wherein, based on the SENSE being inapplicable to the terminal, the PLMN selection is performed based on a priority order.

<u>100</u>

FIG. 1

**FIG. 2**

**FIG. 3**

**FIG. 4**

EP 4 668 872 A1

**FIG. 5**

**FIG. 6**

EP 4 668 872 A1

```
        710              720                730                740
      ┌──────┐       ┌──────────┐       ┌──────────┐       ┌──────────┐
      │  UE  │       │ VPLMN AMF│       │ HPLMN UDM│       │ UDM SOR-AF│
      └──────┘       └──────────┘       └──────────┘       └──────────┘
```

SIM:5G
SOR in
VPLMN

Registration Request
Type:initial registration

Nudm_uecm_registration()
Registration Type:
"initial" or "emergency"
SUPI, RAT type, access type

Nudm_sdm_get ()

Initial
Registration &&
SoR Update Indicator for
initial registration == UDM request the
AMF to retrieve SOR information when the UE
performs NAS registration
the initial
registration

YES

Nsoraf SoR get 0 :
SOR information

Nudm_sdm_get ()
SOR information

NO

Nudm_sdm_get ()

Registration Accept

**FIG. 7**

810 820 830 840

| UE | VPLMN AMF | HPLMN UDM | SOR-AF |

Registration Request
Type:initial registration

Nudm_uecm_registration()
Registration Type:
"initial" or "emergency",
SUPI, RAT type, access type

Nudm_sdm_get ()

SIM:5G
SOR in
VPLMN

MO :
strationary
IoT

Determine Stationary indication

Initial
Registration &&
Stationary Indication ==
TRUE && SoR Update Indicator for
initial registration == UDM request the AMF
to retrieve SoR information when the UE
performs NAS registration
the initial
registration

YES
Nsoraf SoR get 0 :

Nudm_sdm_get ()
SOR-SENSE information

NO
Nudm_sdm_get ()

Registration Accept

NAS MO
UE configured for using
SENSE

0: indicates that UE is not
configured for using SENSE

1: indicates that UE is
configured for using SENSE

OPERATE AS IF SOR-SENSE IS NOT
RECEIVED. EVEN WHEN RECEIVING
SOR-SENSE, PERFORM NORMAL PLMN
SELECTION BUT NOT PERFORM PLMN
SELECTION USING SENSE VALUE

STORE RECEIVED SOR-SENSE VALUE
AND PERFORM SENSE OPERATION

**FIG. 8**

910 920 930 940

| UE | VPLMN AMF | HPLMN UDM | SOR-AF |

SIM:5G
SOR in
VPLMN

MO :
strationary
IoT

Registration Request

Type:initial registration
Indication of Stationary
IoT based on the UE
NAS MO configuration

Nudm_uecm_registration()

Registration Type:
"initial" or "emergency",
SUPI, RAT type, access type
indication of Stationary IoT

Nudm_sdm_get ()

Initial
Registration &&
Indication of Stationay
IoT && SoR Update Indicator for
initial registration == UDM request the AMF
to retrieve SoR information when the UE
performs NAS registration
the initial
registration

YES

Nsoraf SoR get 0 :

Nudm_sdm_get ()

SOR-SENSE information

NO

Nudm_sdm_get ()

Registration Accept

NAS MO
UE configured for using
SENSE

0: indicates that UE is not
configured for using SENSE

1: indicates that UE is
configured for using SENSE

OPERATE AS IF SOR-SENSE IS NOT
RECEIVED. EVEN WHEN RECEIVING
SOR-SENSE, PERFORM NORMAL PLMN
SELECTION BUT NOT PERFORM PLMN
SELECTION USING SENSE VALUE

STORE RECEIVED SOR-SENSE VALUE
AND PERFORM SENSE OPERATION

## FIG. 9

**FIG. 10**

START

RECEIVE SOR-SENSE INFORMATION
FROM AMF OF FIRST NETWORK
S1101

DETERMINE WHETHER OR
NOT SENSE IS APPLICABLE
S1103

PERFORM PLMN SELECTION BASED ON
WHETHER OR NOT SENSE IS APPLICABLE
S1105

END

**FIG. 11**

START

ACQUIRE TERMINAL-RELATED
INFORMATION FROM TERMINAL AND
TRANSMIT TERMINAL-RELATED
INFORMATION TO UDM OF SECOND NETWORK
S1201

RECEIVE SOR-SENSE INFORMATION
FROM UDM OF SECOND NETWORK
S1203

TRANSMIT RECEIVED SOR-SENSE
INFORMATION TO TERMINAL
S1205

END

**FIG. 12**

EP 4 668 872 A1

## INTERNATIONAL SEARCH REPORT

| | |
|---|---|
| International application No. | |
| | **PCT/KR2024/001046** |

**A. CLASSIFICATION OF SUBJECT MATTER**

**H04W 48/18**(2009.01)i; **H04W 24/08**(2009.01)i; **H04W 8/02**(2009.01)i; **H04W 60/00**(2009.01)i

According to International Patent Classification (IPC) or to both national classification and IPC

**B. FIELDS SEARCHED**

Minimum documentation searched (classification system followed by classification symbols)

H04W 48/18(2009.01); H04W 12/03(2021.01); H04W 12/04(2009.01); H04W 60/00(2009.01); H04W 60/04(2009.01); H04W 8/04(2009.01); H04W 8/12(2009.01); H04W 8/16(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: SOR(Steering of Roaming)-SENSE(signal level enhanced network selection), AMF(access and mobility management function), UDM(unified data management), registration, PLMN(public land mobile network), selection, signal threshold, priority, IoT(internet of things)

**C. DOCUMENTS CONSIDERED TO BE RELEVANT**

| Category* | Citation of document, with indication, where appropriate, of the relevant passages | Relevant to claim No. |
|---|---|---|
| X<br>Y | LG ELECTRONICS et al. CP-SOR for SENSE capable UE. C1-227045, 3GPP TSG-CT WG1 Meeting #139. Toulouse, France. 18 November 2022.<br>See sections 1.2 - C.2; and figure C.2.1. | 1-4,11-15<br>5-10 |
| Y | KR 10-2425675 B1 (SAMSUNG ELECTRONICS CO., LTD.) 28 July 2022 (2022-07-28)<br>See paragraphs [0102]-[0103]; and figure 2h. | 5-10 |
| A | US 2022-0312360 A1 (APPLE INC.) 29 September 2022 (2022-09-29)<br>See paragraphs [0016]-[0135]; and figures 1-10. | 1-15 |
| A | US 2022-0078599 A1 (APPLE INC.) 10 March 2022 (2022-03-10)<br>See paragraphs [0011]-[0061]; and figures 1-5. | 1-15 |
| A | KR 10-2022-0159455 A (HUAWEI TECHNOLOGIES CO., LTD.) 02 December 2022 (2022-12-02)<br>See paragraphs [0069]-[0186]; and figures 1-8. | 1-15 |

◻ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 April 2024** | **18 April 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

| | International application No. |
|---|---|
| | **PCT/KR2024/001046** |

| Patent document cited in search report | | | Publication date (day/month/year) | Patent family member(s) | | | Publication date (day/month/year) |
|---|---|---|---|---|---|---|---|
| KR | 10-2425675 | B1 | 28 July 2022 | CN | 110999343 | A | 10 April 2020 |
| | | | | CN | 110999343 | B | 08 November 2022 |
| | | | | EP | 3603137 | A1 | 05 February 2020 |
| | | | | EP | 3603137 | B1 | 25 January 2023 |
| | | | | US | 10687275 | B2 | 16 June 2020 |
| | | | | US | 10972970 | B2 | 06 April 2021 |
| | | | | US | 2019-0053148 | A1 | 14 February 2019 |
| | | | | US | 2020-0314740 | A1 | 01 October 2020 |
| | | | | WO | 2019-035637 | A1 | 21 February 2019 |
| US | 2022-0312360 | A1 | 29 September 2022 | CN | 116058009 | A | 02 May 2023 |
| | | | | EP | 4169274 | A1 | 26 April 2023 |
| | | | | EP | 4325911 | A1 | 21 February 2024 |
| | | | | EP | 4325912 | A1 | 21 February 2024 |
| | | | | JP | 2023-537596 | A | 04 September 2023 |
| | | | | KR | 10-2023-0037617 | A | 16 March 2023 |
| | | | | US | 2024-0015685 | A1 | 11 January 2024 |
| | | | | WO | 2022-035512 | A1 | 17 February 2022 |
| US | 2022-0078599 | A1 | 10 March 2022 | US | 11184756 | B2 | 23 November 2021 |
| | | | | US | 2019-0182655 | A1 | 13 June 2019 |
| KR | 10-2022-0159455 | A | 02 December 2022 | AU | 2021-247219 | A1 | 17 November 2022 |
| | | | | AU | 2021-247219 | B2 | 15 February 2024 |
| | | | | BR | 112022019885 | A2 | 13 December 2022 |
| | | | | CA | 3178449 | A1 | 07 October 2021 |
| | | | | CN | 113468350 | A | 01 October 2021 |
| | | | | CN | 113470038 | A | 01 October 2021 |
| | | | | CN | 113472562 | A | 01 October 2021 |
| | | | | CN | 113472562 | B | 01 September 2023 |
| | | | | CN | 113472676 | A | 01 October 2021 |
| | | | | CN | 113473372 | A | 01 October 2021 |
| | | | | CN | 113473372 | B | 12 April 2022 |
| | | | | CN | 113543121 | A | 22 October 2021 |
| | | | | EP | 4114045 | A1 | 04 January 2023 |
| | | | | EP | 4120640 | A1 | 18 January 2023 |
| | | | | EP | 4132113 | A1 | 08 February 2023 |
| | | | | JP | 2023-519614 | A | 11 May 2023 |
| | | | | JP | 2023-519997 | A | 15 May 2023 |
| | | | | US | 2022-0270260 | A1 | 25 August 2022 |
| | | | | US | 2022-0414859 | A1 | 29 December 2022 |
| | | | | US | 2023-0018349 | A1 | 19 January 2023 |
| | | | | US | 2023-0019667 | A1 | 19 January 2023 |
| | | | | US | 2023-0026812 | A1 | 26 January 2023 |
| | | | | US | 2023-0035970 | A1 | 02 February 2023 |
| | | | | WO | 2021-196904 | A1 | 07 October 2021 |
| | | | | WO | 2021-196913 | A1 | 07 October 2021 |
| | | | | WO | 2021-196922 | A1 | 07 October 2021 |
| | | | | WO | 2021-197010 | A1 | 07 October 2021 |
| | | | | WO | 2021-197172 | A1 | 07 October 2021 |
| | | | | WO | 2021-197175 | A1 | 07 October 2021 |
| | | | | WO | 2021-197184 | A1 | 07 October 2021 |
| | | | | WO | 2021-197231 | A1 | 07 October 2021 |

Form PCT/ISA/210 (patent family annex) (July 2022)

INTERNATIONAL SEARCH REPORT
Information on patent family members

International application No.

**PCT/KR2024/001046**

| Patent document cited in search report | Publication date (day/month/year) | Patent family member(s) | | Publication date (day/month/year) |
|---|---|---|---|---|
| | | WO 2021-197255 | A1 | 07 October 2021 |
| | | WO 2021-197272 | A1 | 07 October 2021 |
| | | WO 2021-197354 | A1 | 07 October 2021 |
| | | WO 2021-208964 | A1 | 21 October 2021 |

Form PCT/ISA/210 (patent family annex) (July 2022)